# EUROPEAN PATENT SPECIFICATION

(11) **EP 4 430 683 B1**
(45) Date of publication and mention of the grant of the patent: **06.08.2025**
(21) Application number: 22802240.6
(22) Date of filing: 08.11.2022
(51) Int. Cl.: H01M 4/04, H01M 10/0525, H01M 10/054, H01M 4/02, H01M 4/133, H01M 4/1393, H01M 4/36, H01M 4/587, H01M 4/62

(54) **CARBON ANODE MATERIALS**
KOHLENSTOFFANODENMATERIALIEN
MATÉRIAUX D'ANODE CONTENANT DU CARBONE

(30) Priority: 08.11.2021 GB 202116036
(43) Date of publication of application: 18.09.2024
(73) Proprietor: Faradion Limited, Sheffield, South Yorkshire S1 4DP (GB)
(72) Inventor: WRIGHT, Christopher, Sheffield South Yorkshire S1 4DP (GB); BARKER, Jeremy, Sheffield South Yorkshire S1 4DP (GB); MEYSAMI, Seyyed Shayan, Sheffield South Yorkshire S1 4DP (GB)
(74) Representative: The IP Asset Partnership Limited
(86) International application number: PCT/GB2022/052817
(87) International publication number: WO 2023/079315

(56) References cited:
- WO-A1-2014/162130
- WO-A1-2021/234418
- US-A1- 2017 008 769

## Description

### FIELD OF THE INVENTION

The present invention relates to certain novel carbon-containing anode materials, to a novel process to produce such carbon-containing anode materials, to anode electrodes which contain such novel carbon-containing anode materials and to the use of such anode electrodes in, for example, energy storage devices such as batteries (especially rechargeable batteries), electrochemical devices and electrochromic devices.

### BACKGROUND OF THE INVENTION

Sodium-ion batteries are analogous in many ways to the lithium-ion batteries that are in common use today; they are both reusable secondary batteries that comprise an anode (negative electrode), a cathode (positive electrode) and an electrolyte material, both are capable of storing energy, and they both charge and discharge via a similar reaction mechanism. When a sodium-ion (or lithium-ion) battery is charging, Na⁺ (or Li⁺) ions are extracted from the cathode and insert into the anode. Meanwhile charge balancing electrons pass from the cathode through the external circuit containing the charger and into the anode of the battery. During discharge the same process occurs but in the opposite direction.

Lithium-ion battery technology has enjoyed considerable attention in recent years and provides the preferred portable battery for most electronic devices in use today; however, certain components in lithium-ion batteries, such as Li, Cu, Co and graphite are not abundant and the technology is considered too expensive for use in large-scale applications. By contrast, sodium-ion battery technology is still in its relative infancy but is seen as advantageous; sodium is much more abundant than lithium, and it is believed it will provide a cheaper and more sustainable way to store energy into the future, particularly for large-scale applications such as storing energy on the electrical grid.

Significant research progress has been made in developing cathode electrode materials with high charge storage capacities and rate capability, for both lithium-ion and sodium-ion batteries, however, one area which needs more attention is the development of new and more efficient anode electrode materials.

Carbon, in the form of graphite, is a favourable anode material in lithium-ion batteries due to its high gravimetric and volumetric capacity; graphite electrodes deliver reversible capacity of more than 360 mAh/g, comparable to the theoretical capacity of 372 mAh/g. The electrochemical reduction process involves Li⁺ ions being inserted in between the graphene layers, to yield LiC₆. However, graphite is much less electrochemically active towards sodium and this, coupled with the fact that sodium has a significantly larger atomic radius compared with lithium, results in the intercalation between graphene layers in graphite anodes being severely restricted in sodium-ion cells.

The patent application US 2017/008769 A1 describes a carbon-containing anode material which is capable of the insertion and extraction of alkali metal ions. Anodes made using hard carbon materials, on the other hand, (such as described in PCT/GB2020/050872, US2002/0192553A1, US9,899,665B2, US2018/0287153A1) are found to fare much more favourably in sodium-ion cells.

Hard carbons have disordered structures which overcome many of the insertion issues for sodium ions. The exact structure of hard carbon materials has still to be resolved, but in general terms hard carbon is described as a non-graphitisable carbon material lacking long-range crystalline order. Hard carbon has layers, but these are not neatly stacked in long range, and it is a microporous material. Although lacking a definable crystallographic structure, hard carbon is isotropic at the macroscopic level. One of the reasons why it is difficult to construct a universal structural model of hard carbon is that short-range order, domain size, fraction of carbon layers and micropore structure depend on the synthesis conditions, such as carbon sources, carbonisation and pyrolysis temperatures.

Further still, unlike graphite, which has a layered crystal structure in which carbon planes (graphene) are stacked, hard carbon has a turbostratic structure in which carbon layer planes are stacked in a state of being three dimensionally displaced. Therefore, the heat treatment of hard carbon, even at high temperature (e.g. 3000 °C) does not result in a complete transformation from the turbostratic structure to the graphitic structure or the development of graphite crystallites. Thus, hard carbon is structurally quite distinct from graphite and can be said to comprise one or more non-graphitised domains as well as one or more non-graphitisable domains.

Usual methods for producing hard carbon materials which may be utilised in electrodes for secondary battery applications involve heating carbon-rich starting materials such as minerals, for example petroleum coke and pitch coke; secondary plant-based materials such as sucrose and glucose; man-made organic materials such as polymeric hydrocarbons and other organic compounds such as resorcinol formaldehyde; animal-derived materials such as manure; and primary plant-derived materials such as coconut shells, coffee beans, straw, bamboo, rice husks, banana skins, etc., to temperatures greater than 500 °C in an oxygen-free atmosphere. In the case when plant-derived and animal-derived materials are carbonised, "biochar" or biomass-charcoal is produced which may be further processed to obtain hard carbon material.

On the other hand, soft carbon is another form of carbon that is also structurally distinct from graphite, but it is a graphitisable form of carbon and can transform at temperatures from about 750 °C to about 3200 °C to comprise domains of graphitic structure. Thus, soft carbon comprises one or more graphitisable domains. However even after this heat treatment, domains of non-graphitised carbon material may still reside because the transformation may not result in a fully graphitic structure.

An important feature of commercially useful anode materials is the inclusion of a solid electrolyte interphase (SEI) layer which naturally forms as a result of electrolyte decomposition products depositing at the interface between the electrolyte and the anode surface during the first charge cycle of pristine alkali metal-ion batteries. It has been realised for some time that this SEI layer is an essential component of an alkali metal-ion battery, firstly because it protects the anode by inhibiting the transfer of electrons from the anode to the electrolyte, and secondly, because it allows the alkali metal ions to transfer from the electrolyte to the anode, and these two factors influence the battery cycle life. An ideal SEI layer is therefore, both an ionic conductor and an electrical insulator. However, the formation of the SEI layer necessarily consumes a portion of the alkali metal ions which are extracted from the cathode during the initial charge cycle, and this in turn means that they are unavailable for future charge/discharge cycles. Since there is a fixed inventory of charge carriers in an isolated rechargeable battery, this depletion of available alkali metal ions results in an irreversible loss in capacity, and thus a loss in first-cycle coulombic efficiency.

The current work aims to control the formation of the SEI layer (in particular, to control the stability of the SEI layer), in order to maximise its ionic conduction and electronic insulation properties and to minimise the irreversible specific capacity, and thus maximise the first-cycle coulombic efficiency.

Another important feature of a commercially useful anode material is the reversible specific capacity that is achieved. Thus, the current work aims to maximise the anode reversible specific capacity of the anode material.

As described below, the present applicant has engineered the surface and bulk chemistry, surface and bulk morphology, crystallography, thickness and pore structure of anode electrode materials, in order to control the stability and robustness of the SEI layer and thereby to minimise the irreversible capacity of first-cycle loss. Furthermore, the present applicant has engineered the core structure of anode materials in order to maximise the anode reversible specific capacity of the anode material.

Therefore, and in particular, the present invention provides novel carbon-containing anode materials that are engineered to maximise the first-cycle coulombic efficiency as well as maximise the anode reversible specific capacity. Further, the present invention provides a novel process for preparing such surface-engineered carbon-containing anode materials. Such a process will be cost effective, especially on a commercial scale and will use readily available reactants.

The resulting surface-engineered carbon-containing anode materials will be useful in energy storage devices such as batteries (especially secondary (rechargeable) batteries), alkali metal-ion cells (particularly sodium-ion cells), electrochemical devices and electrochromic devices. Importantly, these surface engineered carbon-containing anode materials will produce energy storage devices that deliver excellent results for anode reversible specific and first discharge capacity efficiency (coulombic efficiency, calculated as the ratio of the total charge extracted from the battery to the total charge put into the battery over a full cycle), and significantly reduced irreversible capacity (first cycle loss). Moreover, the novel surface engineered carbon-containing anode materials of the present invention will provide surprising and advantageous handling characteristics compared with prior art carbon-containing anode materials.

To accomplish these aims, the present invention provides a carbon-containing anode material which is capable of the insertion and extraction of alkali metal ions and which has a carbon structure comprising:
a) a core that comprises one or more primary carbon-containing materials selected from i) templated porous carbon material, and/or ii) activated carbon material having a specific surface area of from about 200 m²/g to about 1000 m²/g, as determined using nitrogen gas BET analysis; and
b) an outer surface comprising one or more carbonised materials chemically bonded on the one or more primary carbon-containing materials, wherein the carbon-containing anode material has an open micropore specific surface area of 0 m²/g to 5 m²/g, as determined using nitrogen gas BET analysis.

The activated carbon material of the present invention has a specific surface area of from about 200 m²/g to about 1000 m²/g, as determined using nitrogen gas BET analysis. This is not a requirement of the templated porous carbon material of the present invention.

As used herein the term "core" means the central part of the carbon structure. Furthermore, the phrase "chemically bonded" as used herein means that a chemical bond such as a covalent bond is formed between the one or more primary carbon-containing materials and the one or more carbonised materials. Therefore, "strong bonds" are included within meaning of this phrase, but "weak-bonds" such as van der Waals interactions are not included within the meaning of this phrase.

As the carbonised material is "chemically bonded" to the primary carbon containing material, preferably by the use of chemical vapour deposition according to the present invention, this advantageously allows engineering to the surface of the primary carbon-containing material at the individual particle level. Moreover, as the secondary carbon-containing material of the present invention is pyrolytically decomposed on the one or more primary carbon-containing materials, this "bottom-up synthesis approach" allows carbon atoms to be deposited on the outer surface of the one or more primary carbon-containing materials. Advantageously, this affords precise control over the thickness and surface composition of the carbon-containing anode material of the present invention.

As such, the carbon-containing anode material comprises one or more primary carbon-containing materials with an outer surface which is engineered to exhibit particular surface characteristics as described below, and most ideally the carbon-containing anode material according to the present invention comprises one or more primary carbon-containing materials with an outer surface which is engineered to exhibit an open micropore specific surface area of 0 m²/g to 5 m²/g, as determined using nitrogen gas BET analysis. An open micropore specific surface area of greater than 0 m²/g to 5 m²/g, as determined using nitrogen gas BET analysis may be used in some instances.

The choice of core material of the carbon-containing anode material, that is, a core that comprises one or more primary carbon-containing materials of the present invention has surprisingly found to have an effect on the anode reversible specific capacity of the anode material.

Once surface treated according to the present invention, a core that comprises one or more primary carbon-containing materials selected from i) templated porous carbon material, and/or ii) activated carbon material, in which the activated carbon has a specific surface area of from about 200 m²/g to about 1000 m²/g, as determined using nitrogen gas BET analysis, has surprisingly been found to result in a carbon-containing anode material having improved anode reversible specific capacity.

The term "templated" as used herein means a porous carbon material that has been produced by an endo-templating method that uses a porogenic substance (e.g., particles or organic and/or inorganic moieties) as a template.

A "templated" porous carbon material is therefore distinct from a porous carbon material that has been produced by physical activation (e.g., using a reactive gas such as steam or CO₂) and/or chemical activation (e.g., using a hydroxide such as KOH or an acid such as H₃PO₄) because these modes of activation do not employ a porogenic substance.

Porogenic substances used in the endo-templating processes are distinct from the activating agents used in the chemical activation processes because porogenic substances are engineered to be essentially inert towards carbon, (that is, not to substantially oxidise carbon) and to locally occlude the carbonisation of the carbon source in and around the sites where porogenic substances are present. Upon removal of the porogenic substance, a pore structure is left behind that closely resembles the characteristics of the template, such as the interconnectivity (or lack of it), size and volume distribution. This contrasts with activating agents used in the chemical activation processes which are selected to oxidise the carbon during or after a carbonisation process.

A templated porous carbon material has been found to be particularly preferred as a primary carbon-containing material in the present invention because the templating process results in greater control over the pore size and pore size distribution of the carbon material, which contrasts physical and/or chemical activation. More particularly, although without wishing to be bound by theory, a templated porous carbon material as a primary carbon-containing material in the present invention is believed to comprise a more favourable average size and pore size distribution for the internal (closed) pores, compared to the internal (closed) pore characteristics of non-templated hard carbon material that has been thermally treated to temperatures above 1600 °C (typically between 1800 to 3000 °C). Indeed, such annealing methods used in the latter are known to enlarge the internal (closed) pore, but the side effects of such annealing treatments are that the storage capacity of hard carbon is typically reduced.

Thus, a templated porous carbon material as a primary carbon-containing material in the present invention, which is then surface treated in accordance with the present invention results in a carbon-containing anode material that has a surprisingly high anode reversible specific capacity. This is an unexpected benefit that is demonstrated by the present invention.

In one embodiment, the carbon-containing anode material has a specific surface area of 0 m²/g to 5 m²/g, as determined using nitrogen gas BET analysis. The carbon-containing anode material may have a specific surface area of about 1.5 m²/g to about 3.5 m²/g, as determined using nitrogen gas BET analysis.

In one embodiment, the carbon-containing anode material comprises an average pore radius of about 9 Å or greater, as determined using small angle X-ray scattering.

Preferably, the carbon-containing anode material comprises an average pore radius of from about 9 Å to about 30 Å, and ideally of from about 10 Å to about 15 Å as determined using small angle X-ray scattering.

In one embodiment, the carbon-containing anode material comprises an open micropore specific surface area of less than 0.1 m²/g to 0 m²/g, as determined using nitrogen gas BET analysis.

In one embodiment, the carbon-containing anode material comprises a maximum of 5.0 atomic percent of oxygen on its outer surface. In one embodiment, the carbon-containing anode material comprises a minimum of 92.0 atomic percent of carbon on its outer surface.

Suitable primary carbon-containing materials of the present invention are in any particulate (e.g. granular or powdered) form and are capable of the insertion and extraction of sodium ions. Ideally, the one or more primary carbon-containing materials are derived from the pyrolysis of plant-based materials, animal-derived materials, hydrocarbon materials, carbohydrate materials and other carbon-containing organic materials. The one or more primary carbon-containing materials may also comprise one or more carbon composite materials represented by: (carbon)-X, where X is one or more elements selected from the group consisting of antimony, tin, phosphorus, sulfur, boron, aluminium, gallium, indium, germanium, lead, arsenic, bismuth, titanium, molybdenum, selenium, tellurium, silicon, carbon and magnesium; or where X is one or more oxides of elements selected from the group consisting of antimony, tin, phosphorus, sulfur, boron, aluminium, gallium, indium, germanium, lead, arsenic, bismuth, titanium, molybdenum, selenium, tellurium, silicon, carbon and magnesium.

The templated porous carbon material may in one embodiment comprise a graphitisable domain. An example of this is soft carbon. Therefore, the templated porous carbon material may comprise or consist of templated soft carbon.

The templated porous carbon material may in another embodiment comprise a non-graphitisable domain and a non-graphitised domain. An example of this is hard carbon. Therefore, the templated porous carbon material may comprise or consist of templated hard carbon.

The templated porous carbon material may in another embodiment comprise or consist of templated graphite.

In one embodiment, the templated porous carbon is selected from the group consisting of templated hard carbon, templated soft carbon, and templated graphite.

In one embodiment, the templated porous carbon material is derived from carbon-containing starting material which is then treated by an endo-templating process. Therefore, in one preferred embodiment (or alternatively in another aspect), the templated porous carbon material, preferably templated hard carbon, may be formed by:
(i) providing one or more carbon-containing starting materials together with one or more porogenic substances and/or one or more compounds used to derive one or more porogenic substances;
(ii) optionally initially heating the components provided in step (i) preferably at a temperature from about 60 to 950 °C;
(iii) optionally purifying the resulting product of step (ii); and
(iv) pyrolysing the components provided in step (i) or the optional resulting product of step (ii) or step (iii), preferably at temperature from about 600 to about 3000 °C.

Once formed, the resulting templated porous carbon material of step (iv) is then subject to a process to prepare a carbon-containing anode material as defined according to the present invention, and as discussed in greater detail below.

Conveniently, the templated porous carbon materials may be produced by heating one or more carbon-containing starting materials with one or more porogenic substances and/or one or more compounds used to derive one or more porogenic substances during heating, to yield a templated porous carbon material. Preferably, the heating is performed at a temperature of about 600 to about 3000 °C, more preferably at a temperature of about 1000 to 1750 °C, and ideally at 1450 ± 50 °C. This heating is therefore preferably a pyrolysis treatment as defined by step (iv) above. A pyrolysing time of 5 minutes to 120 minutes is preferred, a pyrolysing time of 30 minutes to 90 minutes is especially preferred, and a pyrolysing time of 60 minutes is ideal.

The advantage of using one or more compounds to derive one or more porogenic substances during heating (for example, the use of magnesium D-gluconate hydrate is a precursor that yields the porogenic substance (MgO)) is that the primary carbon-containing materials are produced in one step upon heating i.e., in-situ formation of one or more pyrogenic substances upon heating. It is also believed that the approach of using a precursor that yields porogenic substances upon heating yields more uniformly dispersed porogenic substances and with a size distribution more favourable for metal-ion storage. The later approach (e.g. using pre-synthesised MgO) has the advantage of being more cost-effective but is less favourable overall as it results in agglomeration which leads to non-uniform distribution of porogenic substances within the bulk of the core carbon.

The one or more carbon-containing starting materials together with one or more porogenic substances and/or one or more compounds used to derive one or more porogenic substances during heating provided in step (i) will be either i) a single carbon-containing compound containing one or more porogenic substances and/or one or more compounds used to derive one or more porogenic substances during heating, or ii) it will be a physical mixture comprising one or more carbon-containing starting materials in combination with one or more porogenic substances and/or one or more compounds used to derive one or more porogenic substances during heating, or iii) it will be a mixture of i) and ii). Preferably, it will be ii).

Porogenic substances and/or compounds used to derive one or more porogenic substances during heating may include: salts (preferably magnesium or aluminium salts), inorganic compounds, and organometallic compounds (preferably metallocene compounds). Specific examples include magnesium oxide [MgO], magnesium acetate tetrahydrate [C₄H₁₄MgO₈], magnesium carbonate [MgCO₃], magnesium D-gluconate hydrate [(Mg(C₆H₁₁O₇)₂·xH₂O], silicon oxide [SiO₂], aluminium oxide [Al₂O₃], aluminium acetate [Al(OH)(C₂H₃O₂)₂], aluminium carbonate [Al₂(CO₃)₃], aluminium gluconate [C₁₈H₃₃AlO₂₁], iron gluconate [Fe[HOCH₂(CHOH)₄CO2]₂], zirconium dioxide [ZrO₂], titanium dioxide [TiO₂], metallocene compounds such as ferrocene [Fe(C₅H₅)₂], or mixtures of such compounds. A magnesium salt such as magnesium D-gluconate hydrate [(Mg(C₆H₁₁O₇)₂·xH₂O] is particularly preferred.

Examples of porogenic substances include: salts (preferably magnesium salts), and inorganic compounds. Specific examples may include: magnesium oxide [MgO], silicon oxide [SiO₂], aluminium oxide [Al₂O₃], zirconium dioxide [ZrO₂], and titanium dioxide [TiO₂].

Examples of compounds used to derive one or more porogenic substances during heating include: salts (preferably magnesium or aluminium salts), inorganic compounds, and organometallic compounds (preferably metallocene compounds). Specific examples may include: magnesium acetate tetrahydrate [C₄H₁₄MgO₈], magnesium carbonate [MgCO₃], magnesium D-gluconate hydrate [(Mg(C₆H₁₁O₇)₂·xH₂O], aluminium acetate [Al(OH)(C₂H₃O₂)₂], aluminium carbonate [Al₂(CO₃)₃], aluminium gluconate [C₁₈H₃₃AlO₂₁], iron gluconate [Fe[HOCH₂(CHOH)₄CO2]₂], and metallocene compounds such as ferrocene [Fe(C₅H₅)₂].

Single carbon-containing compounds containing one or more porogenic substances and/or one or more compounds used to derive one or more porogenic substances during heating may include: salts (preferably magnesium or aluminium salts). Specific examples may include magnesium acetate tetrahydrate [C₄H₁₄MgO₈], aluminium acetate [Al(OH)(C₂H₃O₂)₂], magnesium D-gluconate hydrate [(Mg(C₆H₁₁O₇)₂·xH₂O], or aluminium gluconate [C₁₈H₃₃AlO₂₁]).

Where a physical mixture is used in step (i) as discussed above, the one or more carbon-containing starting materials may include carbon-containing materials such as plant based material, biomass, animal-derived material (including "animal-derived waste material" obtained after food has passed through, and has been excreted from, the digestive tract of an animal), hydrocarbon materials (including fossil fuel materials such as milled carbon fibre, coke, coal, coal pitch, coal tar, petroleum pitch, petroleum tar, resins and oil) carbohydrate materials (e.g. glucose, sucrose, or lignin), organometallic compounds (e.g. metallocenes) and other carbon-containing organic materials. A carbohydrate such as glucose is particularly preferred.

Where a physical mixture is used as discussed above, it preferable in step (i) that the one or more carbon-containing starting materials are selected from a hydrocarbon material and carbohydrate material, and the one or more porogenic substances and/or one or more compounds used to derive one or more porogenic substances are selected from a salt, an inorganic compound, and an organometallic compound. It is particularly preferable in step (i) that the one or more carbon-containing starting materials comprises a carbohydrate material and the one or more porogenic substances and/or one or more compounds used to derive one or more porogenic substances comprises a magnesium salt.

Similarly, where a physical mixture is used, step (i) may further include a mixing step that could involve (but is not limited to) dry and solvent-mediated blending techniques. This would involve mixing a desired mass ratio of the one or more carbon-containing starting materials together with the one or more porogenic substances and/or one or more compounds used to derive one or more porogenic substances (such as 1:1 molar ratio based on anhydrous masses) to control the extent of templating. Ideally, the mixing step will provide a homogenous mixture to ensure a uniform concentration of the one or more carbon-containing starting materials together with the one or more porogenic substances, throughout the mix.

Solvent-mediated blending techniques may initially involve dissolution, solvation or dispersion of the more carbon-containing starting materials together with the one or more porogenic substances and/or one or more compounds used to derive one or more porogenic substances in aqueous or non-aqueous solvents. The preferably homogenously dissolved, solvated or dispersed mixture of the one or more carbon-containing starting materials together with the one or more porogenic substances and/or one or more compounds used to derive one or more porogenic substances is then preferably separated from the solvent by the means of the dehydration (e.g., via evaporation and or sublimation using drying and or freeze-drying techniques), sedimentation (e.g., using gravity, filtration, phase separation or centrifugal force), or recrystallisation or a combination of such methods.

Where a physical mixture is used as discussed above, it may be beneficial to perform an initial heating step on the physical mixture, prior to pyrolysis, to drive any volatile compounds away (e.g. by evaporation, sublimation or decomposition) from the mixture. This is identified as optional step (ii). More particularly, the initial heating step may be performed at a temperature of from about 60 to 200 °C (e.g. drying), or it may be performed a temperature of from about 80 to 250 °C. It is preferred that any initial heating is performed under a non-oxidating atmosphere which may comprise one or more selected from nitrogen, carbon dioxide, and argon, and may optionally include a reducing agent such as hydrogen (e.g.1-5 wt% hydrogen in argon).

Alternatively, or additionally, in those instances where a physical mixture is used, it may be beneficial to perform an initial heating step prior to pyrolysis on the physical mixture, to oxidise and/or carbonise (i.e. carbonisation) the one or more carbon-containing starting materials. Again, this is identified as optional step (ii). This treatment may be particularly advantageous when the one or more carbon-containing starting materials are hydrocarbon materials (including fossil fuel materials such as milled carbon fibre, coke, coal, coal pitch, coal tar, petroleum pitch, petroleum tar, resins and oil), carbohydrate materials (e.g. glucose, sucrose, or lignin), organometallic compounds (e.g. metallocenes) and other carbon-containing organic materials. More particularly, the initial heating step in these instances may be performed at a temperature of from about 250 to 950 °C. This initial heat treatment is particularly advantageous because it causes the one or more porogenic substances and/or one or more compounds used to derive one or more porogenic substances to be dispersed within the one or more carbon-containing starting materials in the physical mixture.

Where a physical mixture is used as discussed above, and the one or more carbon-containing starting materials are hydrocarbon materials (including fossil fuel materials such as milled carbon fibre, coke, coal, coal pitch, coal tar, petroleum pitch, petroleum tar, resins and oil), a partial oxidation step may be employed prior or during the initial heat treatment (carbonisation) discussed above (i.e., prior to or during optional step (ii)). This partial oxidation step favourably enriches the oxygen content of the resulting material and inhibits graphitisation during any proceeding thermal processing step. Following any proceeding thermal processing step, the net result is a hard carbon material.

Alternatively, or additionally, in those instances where a physical mixture is used, it may be beneficial to carbonise the physical mixture solvothermally or hydrothermally, prior to pyrolysis. Solvothermal or hydrothermal carbonisation may be performed at temperatures between 50 - 600 °C in an isolated reaction vessel (e.g., a sealed autoclave with inert or reactive lining materials). The pressure, in this case is maintained preferably above 1 bar, and a solvent may be used if desired.

The initial heating in optional step (ii) is typically from about 5 minutes to about 180 minutes, preferably from about 60 minutes to about 180 minutes, and ideally from about 30 minutes to about 120 minutes. A temperature from about 60 to 950 °C is preferred, from about 250 to 950 °C is more preferred, and about 600 °C is ideal.

It is desirable during the production of the templated porous carbon materials that the particles of the one or more carbon-containing starting materials comprising the one or more porogenic substances have a d50 particle size of about 1 µm to about 25 µm, and more preferably about 8 µm to about 25 µm. A d50 particle size of about 4 µm to about 15 µm is also preferred. Therefore, an optional primary milling step may be performed after an initial heat treatment as discussed above, and prior to the proceeding steps as discussed below. That is, an optionally milling step may be performed on the resulting product of step (ii) (i.e. between steps (ii) and (iii)).

Following an initial heat treatment (e.g. carbonisation), and any optional milling, the resulting carbon material is preferably treated at optional step (iii) to remove (or at least partially remove) any unwanted materials from the carbon material. Optional step (iii) thus purifies the resulting product of step (ii). Ideally, such purification includes demineralisation. Such unwanted materials may include the one or more porogenic substances used in the process to prepare the templated porous carbon material or any other unwanted inorganic impurities that were present in the one or more carbon-containing starting materials prior to carbonisation. This treatment step preferably involves any suitable treatment process or the use of any suitable apparatus known to the skilled person, to separate and remove the unwanted materials. For example, this may include using dissolution, solvation, filtration, centrifugation and sedimentation techniques known to the skilled person. The use of use of ion exchange materials, chemical separation techniques, chromatographic separation techniques, electrophoresis separation techniques, the use of complexing agents, phase separation, or chemical precipitation techniques may also be desirable. Physical techniques such as melting or evaporation could also be used.

In a preferred embodiment, the carbonised material is chemically treated to dissolve, solvate or disperse, any soluble or dispersible unwanted materials, which may be present as discussed above. This preferred chemical treatment step is ideally performed in solutions with pH values of above 7 and/or below 7, preferably 8 or above and/or 6 or below, and consequently involves treating the carbonised material using an alkaline solution and/or an acid solution. Thus, step (ii) preferably includes using alkali and/or acid conditions.

Alkaline treatment is typically conducted in a concentrated solution of an alkaline reagent dissolved in a suitable solvent (preferably water). Preferably the solution will be at least a 2.0 M alkaline solution, or molten bath (preferably a pure molten bath). One or more alkaline reagents may be employed, for example one or more selected from an alkali metal, an alkaline earth metal, ammonia and an aqueous soluble hydroxide. Potassium hydroxide and sodium hydroxide, or a mixture of the two, are suitable alkaline reagents, and a molten bath comprising an alkali metal hydroxide, e.g. NaOH (10-90%) and/or KOH, is particularly ideal. The resulting alkaline treated carbon material is then removed from the alkali solution and washed or rinsed at least once (preferably multiple times) with at least one solvent that dissolves and facilitates the removal of the unwanted materials as well as any residual alkaline reagent. Preferably the washing solvent has a pH value from about 6 to 8, and deionised water is particularly ideal. The use of filtration or centrifugation of the alkaline treated carbon material may then follow as a final step along with drying the material, if necessary.

Acid treatment is typically conducted in a solution of an acid reagent dissolved in a suitable solvent (preferably water). Suitable acids include one or more selected from hydrochloric acid (> 0.1 M), hydrofluoric acid (10-50%), nitric acid and sulfuric acid (40-90%). The acid solution is preferably dilute; 1.0M to less than 3.0M solutions work well, and a 2.0M solution, preferably a 2.0M HCl solution, is especially preferred. A boiling solution of 2.0M HCl solution can also be used. The resulting acid treated carbon material is then removed from the acidic solution and washed or rinsed at least once (preferably multiple times) with at least one solvent that dissolves and facilitates the removal of the unwanted materials as well as any residual acidic reagent. Preferably the washing solvent has a pH value from about 6 to 8, and deionised water is particularly ideal. The use of filtration or centrifugation of the acid treated templated porous carbon material may then follow as a final step along with drying the material, if necessary.

It is desirable that the templated porous carbon materials used in the present invention will preferably have a d50 particle size of about 1 µm to about 25 µm, and more preferably about 8 µm to about 25 µm. A d50 particle size of about 4 µm to about 15 µm is also preferred. Therefore, an optional primary milling step (or an additional milling step if a primary milling step may be necessary as discussed above) may be performed. An optional milling step may be performed after step (iii) but before step (iv). Alternatively, or additionally, milling may be performed after step (iv). Pyrolysis at step (iv) is as defined above.

The one or more carbon-containing starting materials used to produce (that is, what the templated porous carbon materials may be derived from) the templated porous carbon materials may comprise disordered and/or ordered carbon-containing materials. Particularly preferred carbon-containing starting materials include: hard carbon, soft carbon, and graphite, with hard carbon being especially preferred.

The one or more carbon-containing starting materials used to produce (that is, what the templated porous carbon materials may be derived from) the templated porous carbon materials may comprise disordered carbon-containing materials, and further preferably they may include one or more materials selected from conventional carbon anode materials (e.g., hard carbon anode materials); non-fully graphitised high-temperature hard carbon (e.g., where a hard carbon material is annealed to temperatures greater than 2000 °C); carbon-metal, carbon-semi-metal or carbon-non-metal composite materials (for example carbon-Sb, carbon-Sn, carbon-Si, carbon-Pb, carbon-Ti and carbon-P) (hard carbon analogues of these materials are especially preferred); soft carbon material; a carbon-conductive additive mixture (for example hard carbon-carbon black mixture, a suitable carbon black may be Super C65^{™} material commercially available from Imerys); a carbon-oxide composite material (for example hard carbon-Fe₂O₃, hard carbon-Sb oxide, hard carbon Sn oxide, hard carbon-Sb/Sn oxide); and carbon-carbide composite materials (for example hard carbon-SiC composite material); and activated carbon material (for example activated hard carbon with BET surface area of > 100 m²/g).

Other preferred one or more carbon-containing starting materials comprise carbon (for example hard carbon, soft carbon, as described above), in combination with one or more elements and/or compounds. Particularly preferred example combinations include carbon/X materials, where X may be one or more elements such as antimony, tin, phosphorus, sulfur, boron, aluminium, gallium, indium, germanium, lead, arsenic, bismuth, titanium, molybdenum, selenium, tellurium, silicon, carbon or magnesium. Carbon/Sb, carbon/Sn, carbon/SbₓSn_{y}, carbon/phosphorus, carbon/silicon, carbon/silicon carbide (HC/SiC), or carbon/sodium silicate are suitable carbon-containing materials. Hard carbon analogues of one or more of these materials are especially preferred. Further preferred example combinations include carbon/X materials, where X may be one or more oxides of elements selected from the group consisting of antimony, tin, phosphorus, sulfur, boron, aluminium, gallium, indium, germanium, lead, arsenic, bismuth, titanium, molybdenum, selenium, tellurium, silicon, carbon and magnesium.

In some embodiments, the one or more carbon-containing starting materials may contain one or more metal and/or non-metal ions which may act as a dopant in the final carbon-containing anode material. These metals and/or non-metal ions may either be added to the one or more primary carbon-containing materials prior to surface treatment with a carbonised material as described below, or be added to the one or more carbon-containing starting materials used to make the templated porous carbon materials prior to pyrolysis. Alternatively, one or more metal and/or non-metal ions may be selectively retained in the one or more carbon-containing starting materials prior to pyrolysis and will therefore be carried through into the templated porous carbon materials.

Conveniently, the one or more carbon-containing starting materials comprising hard carbon and/or soft carbon that are used to produce the templated porous carbon material may be produced themselves by pyrolysis (high temperature treatment, typically greater than 700 °C to 2500 °C) of carbon-based materials such as plant based material, biomass, animal-derived material (including "animal-derived waste material" obtained after food has passed through, and has been excreted from, the digestive tract of an animal), hydrocarbon materials (including fossil fuel materials such as milled carbon fibre, coke, coal, coal pitch, coal tar, petroleum pitch, petroleum tar, resins and oil) carbohydrate materials (e.g. glucose, sucrose, or lignin), organometallic compounds (e.g. metallocenes) and other carbon-containing organic materials, typically under a non-oxidising atmosphere comprising one or more selected from nitrogen, carbon dioxide, another non-oxidising gas and an inert gas such as argon.

Preferably, the carbon-based materials used to produce the one or more carbon-containing starting materials are purified, ideally prior to pyrolysis, to remove unwanted non-carbon-containing material (for example metal-containing ions (such as transition metals, alkali metals or alkaline earth metals), and non-metal-containing-ions (e.g. phosphorus, oxygen, hydrogen) using process steps that may include one or more selected from carbonisation (typically at a temperature of 150 °C to ≤ 700 °C), decomposition, chemical treatment (for example using acidic and/or alkaline conditions), filtration, centrifugation, 'heavy media separation' or 'sink and float separation', the use of ion exchange materials, chromatographic separation techniques, electrophoresis separation techniques, the use of complexing agents or chemical precipitation techniques and milling (typically to a d₅₀ particle size of ca. 8-25 µm and filtered through a 15-25 µm sieve to exclude larger particles).

As discussed above, once surface-treated according to the present invention, a core that comprises one or more primary carbon-containing materials selected from i) templated porous carbon material, and/or ii) activated carbon material, in which the activated carbon has a specific surface area of from about 200 m²/g to about 1000 m²/g, as determined using nitrogen gas BET analysis, has surprisingly been found to result in a carbon-containing anode material having improved anode reversible specific capacity.

A preferred activated carbon material in accordance with the present invention has a specific surface area of from about 250 m²/g to about 1000 m²/g, preferably from about 300 m²/g to about 800 m²/g, and highly preferably from about 500 m²/g to about 800 m²/g.

In one embodiment, the particle size distribution of the one or more primary carbon containing materials is from about 1nm to about 30 µm, preferably from about 1nm to 20 µm. In particular, the Applicant understands that the surface treatment of the present invention does not substantially alter the particle size distribution of the one or more primary carbon containing materials. Therefore, this range applies to the particle size distribution of the one or more primary carbon containing materials before the carbonised materials are chemically bonded on the one or more primary carbon-containing materials, as well as after this treatment has taken place.

In one embodiment, the one or more primary carbon containing materials have a d₁₀ particle size of about 0.01 µm to about 4 µm.

In one embodiment, the one or more primary carbon containing materials have a d₅₀ particle size of about 4 µm to about 15 µm. In another embodiment, the one or more primary carbon containing materials have a d₅₀ particle size of from about 1 to about 25 µm, preferably of from about 8 to about 25 µm.

In one embodiment, the one or more primary carbon containing materials have a d₉₀ particle size of about 15 µm to about 30 µm.

The surface characteristics of the carbon-containing anode materials according to the present invention have been investigated using BET techniques to determine the specific surface area of the open micropores, that is micropores which have their open mouth formed at the surface of the carbon-containing anode materials. Herein, the "surface" is literally on the outside of, the carbon-containing anode particles. Pores denoted as "micropores" are those which have a diameter of less than 2 nm, and they are distinct from "mesopores" which are pores that have a diameter of around 2nm to 50nm.

The present Applicant has found that significantly improved electrochemical performance can be achieved in the case of electrochemical cells that employ surface-engineered carbon-containing anode materials according to the present invention which have an open micropore specific surface area which is greater than 0 m²/g up to a maximum of 5 m²/g, preferably up to a maximum of 0.9 m²/g, particularly preferably up to a maximum of 0.5 m²/g, highly preferably up to a maximum of 0.3 m²/g and most preferably up to a maximum of 0.15 m²/g, as determined using nitrogen gas BET analysis.

The surface-engineered carbon-containing anode materials according to the present invention are conveniently produced when one or more primary carbon-containing materials (which are in solid form and preferably in particulate, granular or powered form) are treated with one or more secondary carbon-containing materials. This treatment results in carbonised material being preferably chemically bonded, more preferably chemically deposited, to the primary carbon containing material. In a highly preferred embodiment, the use of chemical vapour deposition is used in the process of the present invention.

The present invention is not however limited to the use of chemical vapour deposition. Indeed, the skilled person would be aware of alternative methods to chemically bond materials to a primary substrate. Example of these may include plasma-enhanced deposition, atomic-layer deposition and physical vapour deposition.

"Carbonised material" as referred to herein is a carbon-rich solid species that is derived from one or more secondary carbon-containing materials. Most particularly the present invention employs such carbonised material as an extremely thin deposit on the outer surface of the one or more primary carbon-containing materials. Although the carbonised material is preferably deposited substantially uniformly over the surface of the inner core, it is important to note that the deposit may not necessarily be in the form of a complete layer or an even coating (i.e., the primary carbon-containing material and deposited carbonised material may not necessarily be in a core/full shell-type arrangement). Nevertheless, the material, where deposited, preferably has a thickness of 1nm to less than 500nm, further preferably from 10nm to less than 500nm, and highly preferably from 10nm to 250nm. Ideally, between 10% to 90% of the surface area of the outer surface of the one or more primary carbon-containing materials will be covered with the carbonised material derived from the one or more secondary carbon-containing materials. The mass of the deposit is also extremely small (typically 2.2 ± 0.8 wt.% per 30 minutes of deposition). Therefore, the carbonised material does not substantially alter the particle size distribution of the one or more primary carbon containing materials as discussed above.

Preferably, suitable secondary carbon-containing materials from which the carbonised material is derived, may be selected from one or more organic and/or hydrocarbon materials, for example alkanes, alkenes, alkynes or arenes, which may be straight chained, branched, cyclic, aliphatic or aromatic. The secondary carbon-containing materials themselves may be derived from coal- or petroleum-based tar or pitch, resins, oil or plant-based materials. Secondary carbon-containing materials which comprise one or more gaseous hydrocarbons with the general formula: CₙH₂ₙ₊₂ where 1 ≤ n ≤ 10, are particularly preferred.

In one embodiment, the secondary carbon-containing materials from which the carbonised material is derived may comprise a vapour and/or a liquid and/or a gaseous phase at, at least one temperature from about 950 °C or less. Preferably, a vapour and/or a liquid and/or a gaseous phase at, at least one temperature between about 200 °C or more to about 950 °C or less.

The specific surface area of the open micropores of the carbon-containing anode materials of the present invention is found to be dramatically lower than the specific surface area of the open micropores of the primary carbon-containing materials prior to the treatment with the carbonised material derived from the one or more secondary carbon-containing materials (as described above). It is believed that this is due to the mouth of at least a portion of the open micropores (i.e., those at the surface) of the carbon-containing anode material being "masked" or "plugged" by the deposited carbonised material. Preferably, the presence of the chemically deposited carbonised material derived from one or more secondary carbon-containing materials causes the area of the surface micropores of the carbon-containing anode materials to be reduced, compared with the surface area of the open micropores of the primary carbon-containing materials prior to, or in absence of the treatment with the carbonised material. The high reduction in open micropore surface area appears to support the Applicant's current understanding that the deposited carbonised material only plugs the surface (open) micropores, moreover, this belief is further supported by the fact that no significant weight gain in the primary carbon-containing materials can be measured post treatment with carbonised material.

As disclosed above, the present invention provides a carbon-containing anode material comprising carbonised material deposited or partially deposited on the outer surface of a primary carbon-containing material.

The carbonised material may be a "soft" carbon-containing species that will, to some degree, be graphitised by the thermal process, and the presence of graphitised material can be verified for example by Raman spectroscopy, X-ray diffraction or high-resolution transmission electron microscopy. However, it is important to control the formation of the carbon-containing anode material such that it has a degree of graphitisation which is suitable for the chemistry of the particular cell in which it is being used. For example, graphitisation in the case of Na-ion cells is highly preferably limited to a level often observed in conventional hard carbon materials, that is, it is desirable to avoid highly graphitised soft carbon-containing species on the surface of the primary carbon-containing material for the purpose of reversible sodiation because graphite is much less electrochemically active towards sodium than hard carbon. The opposite would be the case for lithium-ion cells however.

Care must be taken to avoid the formation of highly graphitic domains as these catalyse various parasitic reactions (e.g., when propylene carbonate (PC) is used in the electrolyte composition). Therefore, extreme annealing is found not to enhance carbon anode efficiency. Surface treatment according to the current invention, on the other hand, is found to systematically improve the efficiency of a carbon-containing anode material, regardless of the electrolyte system. The method of the present invention, however, does not affect the volume of closed pores. This is evident from the fact that primary carbon-containing materials pre- and post-treatment with carbonised material produce similar (de)sodiation potential profiles.

Another preferred characteristic of the surface of the carbon-containing anode materials according to the present invention is an extremely low degree of surface oxygen content. It is known that the presence of compounds with oxygen-containing groups on the surface of the carbon-containing materials (for example C-O, C=O and C(=O)OH functional groups) are liable to act as permanent anchor points for incoming charge carriers and as a platform for undesirable parasitic reactions; both of these factors will contribute towards first cycle loss when these carbon-containing materials are used as anode materials. Advantageously, the carbon-containing anode materials according to the present invention have a surface oxygen content, measured using X-ray photoelectron spectroscopy (XPS), of from 0 atomic percent (atm.%) to about 5.0 atm.%, preferably from 0 atomic percent (atm.%) to about 2.5 atm.%, Thus, the treatment of the one or more primary carbon-containing materials with carbonised material derived from the one or more secondary carbon-containing materials in accordance with the present invention, has the effect to reduce the surface oxygen content of the primary carbon-containing material by at least 30 atm.%, preferably by at least 50 atm.% and further preferably at least 90 atm.%. In some embodiments, it is possible to reduce close to 100 atm. % of the surface oxygen atoms.

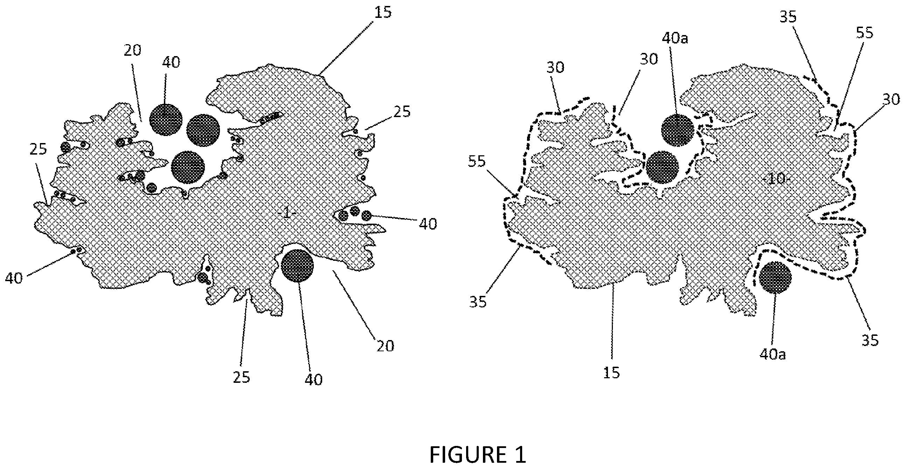

The specific surface area of a carbon-containing anode material as a whole is also generally regarded to be another useful factor which influences the degree of irreversible capacity and first cycle loss. In the case of the present invention, however, although treatment of the one or more primary carbon-containing materials with carbonised material derived from the one or more secondary carbon-containing materials, does indeed reduce the specific surface area of the carbon-containing anode, this reduction is not as significant as the reduction in micropore surface area. All the specific surface area values given in the present application have been determined using BET N₂ analysis, Figure 1 is discussed in detail below to theoretically explain a mechanism for how the surface of the carbon-containing anode materials according to the present invention may be able to produce the observed significant reduction in open (surface) micropore surface area whilst at the same time recording a minimal reduction in the overall surface area.

According to the present invention, the one or more primary carbon-containing materials are treated with one or more secondary carbon-containing materials by contacting one or more primary carbon-containing materials with carbonised material derived from one or more secondary carbon-containing materials to achieve the desired surface engineered carbon-containing anode material.

Contacting the primary carbon-containing materials with the one or more secondary carbon-containing materials may be achieved using any suitable method, such as contacting the primary carbon-containing materials directly with the one or more secondary carbon-containing materials or contacting the primary carbon-containing materials with one or more secondary carbon-containing materials and thereafter facilitating the formation of carbonised material from the one or more secondary carbon-containing materials.

Suitably, contacting the primary carbon-containing materials with the one or more secondary carbon-containing materials may involve a solvent-mediated procedure in which solid primary carbon-based material is mixed with one or more solvents and/or other liquids in which the secondary carbon-containing materials are dissolved, solvated or dispersed, and then removing the solvent/dispersant prior to the carbonisation of the secondary carbon-containing material. Alternatively, a mechanochemical procedure may be used in which the one or more primary and secondary carbon-containing materials are mixed together (either without a solvent or other dispersant or with an agent to aid mixing), prior to carbonisation of the secondary carbon-containing material. Or further alternatively, using a diffusion-based system in which the one or more primary carbon-containing materials in solid form are contacted with the one or more secondary carbon-containing materials in vapour and/or gaseous form, followed by heating to carbonise the secondary carbon-containing material.

In another aspect, the present invention provides a process for the preparation of a carbon-containing anode material which is capable of the insertion and extraction of alkali metal ions comprising:
a) providing a core that comprises one or more primary carbon-containing materials selected from i) templated porous carbon material, and/or ii) activated carbon material having a specific surface area of from about 200 m²/g to about 1000 m²/g, as determined using nitrogen gas BET analysis; and
b) contacting the core with one or more secondary carbon-containing materials at a temperature of up to 950 °C, to thereby yield a carbon-containing anode material that has an outer surface comprising one or more carbonised materials chemically bonded on the one or more primary carbon-containing materials, wherein the carbon-containing anode material has an open micropore specific surface area of 0 m²/g to 5 m²/g, as determined using nitrogen gas BET analysis.

The one or more solid primary carbon-containing materials are preferably in any particulate form (for example granules or powder), as described above. In one embodiment, the particle size distribution of the one or more primary carbon containing materials is from about 1nm to about 30 µm, as also described above.

Suitable primary carbon-containing materials used in the process of the present invention are those described above with reference to the carbon-containing anode material according to the present invention.

In particular, preferably the templated porous carbon material, more preferably templated hard carbon, may be formed by:
(i) providing one or more carbon-containing starting materials together with one or more porogenic substances and/or one or more compounds used to derive one or more porogenic substances;
(ii) optionally initially heating the components provided in step (i) preferably at a temperature from about 60 to 950 °C;
(iii) optionally purifying the resulting product of step (ii); and
(iv) pyrolysing the components provided in step (i) or the optional resulting product of step (ii) or step (iii), preferably at temperature from about 600 to about 3000 °C.

The preferred process above may be further defined as set out above or as defined according to the examples disclosed herein.

The activated carbon material of the present invention has a specific surface area of from about 200 m²/g to about 1000 m²/g, as determined using nitrogen gas BET analysis. This is not a requirement of the templated porous carbon material of the present invention. A preferred activated carbon material in accordance with the present invention has a specific surface area of from about 250 m²/g to about 1000 m²/g, preferably from about 300 m²/g to about 800 m²/g, and highly preferably from about 500 m²/g to about 800 m²/g.

Regarding step b) in the preparation of a carbon-containing anode material, the heating conditions will be selected either i) (in the case when the one or more secondary carbon-containing materials is a material that is carbonised prior to contacting with the primary carbon-containing materials) to facilitate the deposition of the one or more secondary carbon-containing materials onto the surface of the primary carbon-containing materials, or ii) to facilitate the carbonisation of the one or more secondary carbon-containing materials which are already on the surface of the primary carbon-containing materials, or iii) to facilitate carbonisation of the one or more secondary carbon-containing materials and subsequent deposition of the resulting carbonised material on the surface of the primary carbon-containing materials.

In each case, the net result will be that a chemical bond such as a covalent bond is formed between the one or more primary carbon-containing materials and the one or more carbonised materials. Therefore, the one or more carbonised materials will be chemically bonded, preferably chemically deposited, on the surface of the one or more primary carbon-containing materials.

Preferably the temperature used is below that which will lead to the substantial graphitisation of the carbonised material, especially (as discussed above) where the resulting carbon-containing anode material is to be used in a sodium-ion cell. However, it is important that the temperature used according to the process of the present invention will lead to the carbonised material being chemically bonded to the primary carbon containing material.

As described above, the secondary carbon-containing materials from which the carbonised material is preferably derived may therefore comprise a vapour and/or a liquid and/or gaseous phase at, at least one temperature from about 950 °C or less. Preferably, a vapour and/or a liquid and/or a gaseous phase at, at least one temperature between about 200 °C or more to about 950 °C or less.

A maximum temperature of 930 °C is preferred, a maximum temperature of 900 °C is highly preferred and a maximum temperature of 880 °C is particularly preferred. The minimum heating temperature is any which will enable carbonisation of the secondary carbon-containing materials to occur and it will depend on the secondary carbon-containing material being used. A minimum temperature of 600 °C will usually be sufficient although a lower temperature may also be possible if a catalyst or other reagent is used to reduce the activation energy needed to thermo-catalytically decompose and carbonise the secondary carbon-containing material. Possible catalysts include small amounts of one or more of metallic compounds or metal oxide compounds, such as transition metals or transition metal oxides.

As described above, suitable secondary carbon-containing materials from which the carbonised material is derived, may be selected from one or more organic and/or hydrocarbon materials, for example alkanes, alkenes, alkynes or arenes, which may be straight chained, branched, cyclic, aliphatic or aromatic. The secondary carbon-containing materials themselves may be derived from coal- or petroleum-based tar or pitch, resins, oil or plant-based materials. Secondary carbon-containing materials which comprise one or more gaseous hydrocarbons with the general formula: CₙH₂ₙ₊₂ where 1 ≤ n ≤ 10, are particularly preferred.

In a preferred process of the present invention, the total pressure, total flow rate as well as the individual partial pressures and individual flow rates of reagents, when the primary carbon-containing materials are contacted with fluid (liquid, vapour, aerosol or gaseous) secondary carbon-containing materials or fluid (liquid, vapour, aerosol or gaseous)) pre-formed carbonised material as secondary carbon-containing materials, are optimised to ensure the correct amount of carbonised material is deposited on the primary carbon-containing materials. Preferred total pressure, total flow rate and individual partial pressure and individual flow rate of the secondary carbon-containing material are in the range of 10⁻⁶ to 3×10⁷ Pa, 0.001 to 1000 L/min, 10⁻⁶ to 3×10⁷ Pa and 0.001 to 1000 L/min respectively and further preferably in the range of 10⁴ to 10⁶ Pa, 0.01 to 100 L/min, 10⁴ to 10⁶ Pa and 0.01 to 100 L/min and highly preferably in the range 5×10⁴ to 5×10⁵ Pa, 0.1 to 10 L/min, 5×10⁴ to 5×10⁵ Pa and 0.1 to 10 L/min respectively.

Injection chemical vapour deposition (CVD) systems and aerosol-assisted reactors are examples of setups in which pressure and flow rates of individual fluid precursors could be controlled.

In a further preferred process of the present invention, the concentration of carbonised material and/or the concentration of the one or more secondary carbon-containing materials used to contact with the one or more primary carbon-containing materials, is preferably in the range as 0.001 - 100 vol.%, preferably 0.01 - 10 vol.%, further preferably 0.01 to 5 vol% and highly preferably 0.05 - 0.1 vol.% in a carrier gas for gaseous secondary carbon-containing materials, and in the range as 0.001 - 100 vol.% for in a solvent or carrier liquid for liquid and semi solid (e.g. pitch, tar, oil) secondary carbon-containing materials.

In a still further preferred process of the present invention, the duration of the heating step (annealing time) is also preferably tuned to i) minimise, and preferably prevent, substantial graphitisation of the carbonised material; the longer the heating time, the more the carbonised material is likely to be substantially graphitised. And ii) to ensure that it is long enough to chemically deposit enough carbonised material to plug at least a portion of the surface micropores, as discussed above.

As previously described, the process of present invention is not limited to the use of chemical vapour deposition. Indeed, the skilled person would be aware of alternative methods to chemically bond materials to a primary substrate and these are encompassed within the scope of the present invention. Example of these may include plasma-enhanced deposition, atomic-layer deposition and physical vapour deposition.

An annealing time of 5 minutes to 120 minutes is preferred, and an annealing time of 30 minutes to 90 minutes is especially preferred. The annealing time is the period required for the one or more secondary carbon-containing materials to be deposited on the one or more primary carbon-containing materials.

In a particularly preferred process of the present invention, the step of contacting the one or more primary carbon-containing materials in solid form with one or more secondary carbon-containing materials is conducted using any means needed to ensure that at least a portion of the surface of each of the particles of the primary carbon-containing material contacts the one or more secondary carbon-containing materials. Suitable means include: stirring or agitating the primary carbon-containing materials when contacting with the one or more secondary carbon-containing materials; spraying, atomising, aerosolising or fluidising the particles of primary carbon-containing materials into an atmosphere comprising vaporised, sprayed, atomised, emulsified or aerosolised one or more secondary carbon-containing materials; and spreading the primary carbon-containing material over a flat plate or wide mouthed reaction vessel before introducing the one or more secondary carbon-containing materials.

Further still, in a particularly preferred process of the present invention, it is desirable that the step of contacting the one or more primary carbon-containing materials in solid form with one or more secondary carbon-containing materials is performed in the final stage of the process of the present invention. More particularly, it is highly desirable that this step is performed after any abrasive treatment (e.g. milling, griding, crushing or the like) to the one or more primary carbon-containing materials. This advantageously avoids the outer surface comprising the one or more carbonised materials chemically bonded on the one or more primary carbon-containing materials being disturbed. For instance, post surface treatment that comprises abrasive treatment could crack open the passivated surface and expose the micropores or decrease carbon purity e.g., by partially oxidising or hydrating the surface.

For the avoidance of any doubt, post-surface-treatment steps such as mixing the active material with binder, electrode printing (e.g., coating) and electrode calendaring (e.g. rolling), are not considered as "abrasive treatment" within the meaning of this phrase.

The carbon-containing anode material according to the present invention is suitable for use as an electrode active material in secondary battery applications, especially in alkali metal-ion cells, and particularly in sodium-ion cells.

In another aspect, the present invention provides an alkali metal-ion cell comprising at least one negative electrode (an anode) as described above. Preferably, that has an open micropore specific surface area of from greater than 0 m²/g to 5 m²/g determined using nitrogen gas BET analysis. An open micropore specific surface area of greater than 0 m²/g to 5 m²/g, as determined using nitrogen gas BET analysis may be used in some instances.

The alkali metal-ion cell will also comprise a positive electrode (a cathode) which preferably comprises one or more positive electrode active materials which are capable of inserting and extracting alkali metals, and which are preferably selected from oxide-based materials, polyanionic materials, and Prussian Blue Analogue-based materials. Particularly preferably, the one or more positive electrode active materials comprise one or more selected from alkali metal-containing oxide-based materials and alkali metal-containing polyanionic materials, in which the alkali metal is one or more alkali metals selected from sodium and/or potassium, and optionally in conjunction with lithium. Certain positive electrode active materials contain lithium as a minor alkali metal constituent, i.e., the amount of lithium is less than 50% by weight, preferably less than 10% by weight, and ideally less than 5% by weight, of the total alkali metal content.

The most preferred positive electrode active material is a compound of the general formula:

A_{1+δ}M¹_{V}M²_{W}M³_{X}M⁴_{Y}M⁵_{Z}O_{2-c}

wherein
A is one or more alkali metals selected from sodium, potassium and lithium;
M¹ comprises one or more redox active metals in oxidation state +2,
M² comprises a metal in oxidation state greater than 0 to less than or equal to +4;
M³ comprises a metal in oxidation state +2;
M⁴ comprises a metal in oxidation state greater than 0 to less than or equal to +4;
M⁵ comprises a metal in oxidation state +3;
wherein
0 ≤ δ ≤ 1;
V is > 0;
W is ≥ 0;
X is ≥ 0;
Y is ≥ 0;
at least one of W and Y is > 0
Z is ≥ 0;
C is in the range 0 ≤ c < 2
wherein V, W, X, Y, Z and C are chosen to maintain electrochemical neutrality.

For the avoidance of doubt, the term "one or more alkali metals selected from sodium, potassium and lithium" is to be interpreted to include: Na, K, Li, Na+K, Na+Li, K+Li, and Na+K+Li.

Ideally, metal M² comprises one or more transition metals, and is preferably selected from manganese, titanium and zirconium; M³ is preferably one or more selected from magnesium, calcium, copper, tin, zinc and cobalt; M⁴ comprises one or more transition metals, preferably selected from manganese, titanium and zirconium; and M⁵ is preferably one or more selected from aluminium, iron, cobalt, tin, molybdenum, chromium, vanadium, scandium and yttrium. A cathode active material with any crystalline structure may be used, and preferably the structure will be O3 or P2 or a derivative thereof, but, specifically, it is also possible that the cathode material will comprise a mixture of phases, i.e., it will have a non-uniform structure composed of several different crystalline forms.

Highly preferred positive electrode active materials comprise sodium and/or potassium-containing transition metal-containing compounds, with sodium transition metal nickelate compounds being especially preferred. Particularly favourable examples include alkali metal-layered oxides, single and mixed phase O3, P2 and P3 alkali metal-layered oxides, alkali metal-containing polyanion materials, oxymetallates, Prussian blue analogs and Prussian white analogs. Specific examples include O3/P2-A_{0.833}Ni_{0.317}Mn_{0.467}Mg_{0.1}Ti_{0.117}O2, O3-A_{0.95}Ni_{0.3167}Mn_{0.3167}Mg_{0.1583}Ti_{0.2083}O₂ , P2-type A_{2/3}Ni_{1/3}Mn_{1/2}Ti_{1/6}O₂, P2-A_{2/3}(Fe_{1/2}Mn_{1/2})O₂, P'2-A_{2/3}MnO₂, P3 or P2-A_{0.67}Mn_{0.67}Ni_{0.33}O₂, A₃V₂(PO₄)₃, AVPO₄F, AVPO₄F, A₃V₂(PO₄)₃ A₃V₂(PO₄)₂F₃, A₃V₂(PO₄)₂F₃, AₓFe_{y}Mn_{y}(CN)₆.nH₂O (0 ≤ x,y,z ≤ 2; 0 ≤ n ≤ 10), O3, P2 and/or P3- AₓMn_{y}Ni_{z}O₂ (0 ≤ x ≤ 1 and 0 ≤ y,z ≤ 1). A₂Fe₂(SO₄)₃,A₂Ni₂SbO₆ and A₃Ni₂SbO₆, where "A" is these compounds is one or more alkali metals selected from Li, Na and K, is preferably Na and/or K, and is most preferably Na.

Advantageously, the alkali metal-ion cells according to the present invention may use an electrolyte in any form, i.e. solid, liquid or gel composition may be used, and suitable examples include; 1) liquid electrolytes such as >0 to 10 molar alkali metal salt such as NaPF₆, NaBF₄, sodium bis(oxalate) (NaBOB), sodium triflate (NaOTf), LiPF₆, LiAsF₆, LiBF₄, LiBOB, LiClO₄, LiFSi, LiTFSi, Li-triflate and mixtures thereof, preferably in one or more solvents selected from ethylene carbonate (EC), diethyl carbonate (DEC), propylene carbonate (PC), (preferably as a mixture EC:DEC:PC in the ratio 1:2:1 wt./wt.), gamma butyrolactone (GBL) sulfolane, diglyme, triglyme, tetraglyme, dimethyl sulfoxide (DMSO), dioxolane, and mixtures thereof, all with/without diluents such as HFE (1,1,2,2-Tetrafluoroethyl 2,2,3,3-tetrafluoropropyl ether) or D2 (1,1,2,2-Tetrafluoroethyl 2,2,2-trifluoroethyl ether)). 2) gel electrolytes based on either one of the following matrix materials used singularly or in conjunction with each other; or 3) solid electrolytes such as NASICON-type such as Na₃Zr₂Si₂PO₁₂, sulphide-based such as Na₃PS₄ or Na₃SbS₄, hydride-based such as Na₂B₁₀H₁₀-Na₂B₁₂H₁₂ or β-alumina based such as Na₂O.(8-11)Al₂O₃ or the related β"-alumina based such as Na₂O.(5-7)Al₂O₃). Known electrolyte additives such as 1,3-propanediolcyclic sulfate (PCS), P123 surfactant, Tris(trimethylsilyl) Phosphite (TMSP), Tris(trimethylsilyl) borate (TMSB), 1-Propene 1,3 Sultone, 1,3- Propanesultone, may also be included in the electrolyte, as can binders such as polyvinylidenefluoride (PVDF), polyvinylidenefluoride- hexafluoropropylene (PVDF-HFP), poly(methylmethacrylate) (PMMA), sodium carboxymethyl cellulose (CMC) and Styrene-Butadiene Rubber (SBR).

When the metal-ion cell is a sodium-ion cell, an electrolyte comprising one or more solvents selected from ethylene carbonate (EC), diethyl carbonate (DEC), propylene carbonate (PC) is desirable. The electrolyte may comprise propylene carbonate (PC) in combination with ethylene carbonate (EC) and/or diethyl carbonate (DEC). Ideally, the electrolyte comprises a mixture of ethylene carbonate (EC), diethyl carbonate (DEC), propylene carbonate (PC).

Optional electrolyte additives such as one or more of 1,3-propanediolcyclic sulfate (PCS), P123 surfactant and tris(trimethylsilyl) borate (TMSB) may also be included. The electrolyte may also include a sodium metal salt selected from NaPF₆, NaBF₄, preferably NaPF₆.

In another aspect, the invention provides a sodium-ion cell comprising a cathode electrode, an anode electrode and an electrolyte, wherein the anode electrode comprises a carbon-containing anode material as defined herein.

In one embodiment, the electrolyte comprises one or more selected from: > 0 to 10 molar sodium metal salts selected from NaPF6, NaBF4, sodium bis(oxalate) (NaBOB), sodium triflate (NaOTf), preferably in one or more solvents selected from ethylene carbonate (EC), diethyl carbonate (DEC), propylene carbonate (PC), dimethyl carbonate (DMC), ethyl methyl carbonate (EMC), gamma butyrolactone (GBL) sulfolane, diglyme, triglyme, tetraglyme, dimethyl sulfoxide (DMSO), dioxolane, and mixtures thereof; NASICON-type electrolytes, sulphide-based electrolytes, hydride-based electrolytes, β-alumina based electrolytes and β"-alumina based electrolytes.

When the metal-ion cell is a sodium-ion cell, the anode electrode according to the present invention preferably further includes a polymeric binder. Typically, the polymeric binder is selected from polyvinylidene fluoride (PVDF), styrene-butadiene rubber (SBR), and carboxymethylcellulose (CMC). Preferably, the polymer binder comprises carboxymethylcellulose (CMC). Highly preferably, the polymer binder comprises a mixture of styrene-butadiene rubber (SBR) and carboxymethylcellulose (CMC).

When the metal-ion cell is a sodium-ion cell, the anode electrode according to the present invention ideally comprises a carbon-containing anode material according to the present invention (A), one or more polymeric binders (B), and one or more conductive additives (C). Such a mixture is typically mixed with an aqueous or non-aqueous solvent (such as water or N-methyl Pyrrolidone (NMP)) and then disposed as a layer or film on one or more surfaces of an anode current collector via techniques such as doctor blade or slot die methods.

Typically, A:B:C are present in a weight ratio of from 80 to 98 : 1 to 19 : 1 to 19, and ideally in a weight ratio of from 90 to 98 : 1 to 9 : 1 to 9. When the polymer binder comprises polyvinylidene fluoride (PVDF), A:B:C are preferably in present in a weight ratio of about 92:6:2. When the polymer binder preferably comprises carboxymethylcellulose (CMC), and highly preferably comprises a mixture of styrene-butadiene rubber (SBR) and carboxymethylcellulose (CMC), A:B:C are preferably in a weight ratio of about 95:3.5:1.5.

The one or more conductive additives (C) may include one or more of carbon black, carbon nanotubes, graphene, acetylene black, and carbon nanofiber. Preferably, the one or more conductive additives includes carbon black, such as TIMCAL Super C65.

A sodium-ion cell disclosed herein may also include an anode (negative) electrode that includes an anode current collector and/or a cathode (positive) electrode that includes a cathode current collector. The cathode current collector, the anode current collector, or both the cathode current collector and the anode current collector can be formed from aluminium or aluminium alloy (e.g., an alloy of aluminium and one or more of Mg, Mn, Cr, Zn, Si, Fe, and Ni). Preferably, the anode current collector comprises an aluminium current collector. Highly preferably, both the cathode current collector and the anode current collector comprise an aluminium current collector. Alternatively, copper, magnesium, carbon paper/foil/substrate and tin might also be used as current collector materials.

Preferably, the anode current collector also includes one or more carbon-containing layers formed on one or more surfaces of the anode current collector prior to an initial first charge cycle of the sodium-ion cell. Such layers can comprise amorphous carbon (e.g., a carbon black, such as TIMCAL Super C65), ideally having a thickness from about 10 Angstrom to about 1000 µm.

Alternatively, the anode current collector disclosed herein does not include one or more carbon-containing layers on one or more surfaces of the anode current collector prior to an initial first charge cycle of the sodium-ion cell. Therefore, the anode current collector is "pristine" prior to an initial first charge cycle of the sodium-ion cell. As used herein with respect to current collectors, the phrase "pristine" means that the current collector is in its "as made" state prior to an initial first charge cycle of the sodium-ion cell. In other words, the anode current collector is essentially the pure material from which it is formed from, barring impurities (e.g. surface oxide layers etc). As such the anode current collector is not coated with one more carbon-containing layers (as discussed above), conventional active materials, binders, or the like.

A sodium-ion cell disclosed herein may also include a separator located between the cathode and the anode current collector. A polyolefin separator is preferable.

In another aspect, the invention provides a lithium-ion cell comprising a cathode electrode, an anode electrode and an electrolyte, wherein the anode electrode comprises a carbon-containing anode material as defined herein.

In one embodiment, the electrolyte comprises, LiPF₆, LiAsF₆, LiBF₄, LiBOB, LiClO₄, LiFSi, LiTFSi, Li-triflate and mixtures thereof, and one or more solvents selected from ethylene carbonate (EC), diethyl carbonate (DEC), propylene carbonate (PC), dimethyl carbonate (DMC), ethyl methyl carbonate (EMC), gamma butyrolactone (GBL) sulfolane, diglyme, triglyme, tetraglyme, dimethyl sulfoxide (DMSO), dioxolane, and mixtures thereof.

It is to be noted that as well as being excellent anode materials, the surface engineered carbon-containing materials of the present invention also provide additional commercial advantages.

The first of these concerns an improved moisture sensitivity. Due to their extremely low level of open microporosity, the surface-engineered carbon-containing anode materials of the present invention adsorb significantly less atmospheric moisture upon exposure than non-surface engineered primary carbon-containing materials. This not only makes handling the applicant's anode material easier during anode fabrication, but it also reduces the moisture content of the resulting anode coatings and finished cells.

The second unexpected advantage concerns an improvement in the viscosity of an electrode slurry which contains the carbon-containing anode material according to the present invention. During cell manufacture, the viscosity of the electrode slurries should not be overlooked as this will make an important difference to the smooth running of the process and the quality control of the resulting electrode. Electrode materials (active, binder and additives) are typically mixed and dispersed in an organic or aqueous solvent so that they can be coated on the current collector. In the coating process, the solvent evaporates and leaves the dry components behind. Insufficient viscosity results in a slurry which is too runny, and this can lead to misaligned coating edges; an excessively viscose slurry meanwhile will pose process issues because the slurry will not run as smoothly as it should. This adversely affects the quality of dry coating. Typically, electrode materials with reduced surface area require less solvent to achieve a given optimum viscosity. This is advantageous from cost point of view. Thus, as a result of their lower micropore surface area, the surface-engineered carbon-containing anode materials according to the present invention exhibit a lower viscosity for the same solid content, and this yields a smoother surface morphology and purer surface chemistry. Cost savings can be made by using less solvent to achieve a good quality electrode.

### BRIEF DESCRIPTION OF THE DRAWINGS

The present invention will now be described with reference to the following figures in which:
Figure 1 shows a schematic representation of a grain of pristine primary carbon-containing material and a grain of surface engineered carbon-containing anode material according to the present invention.

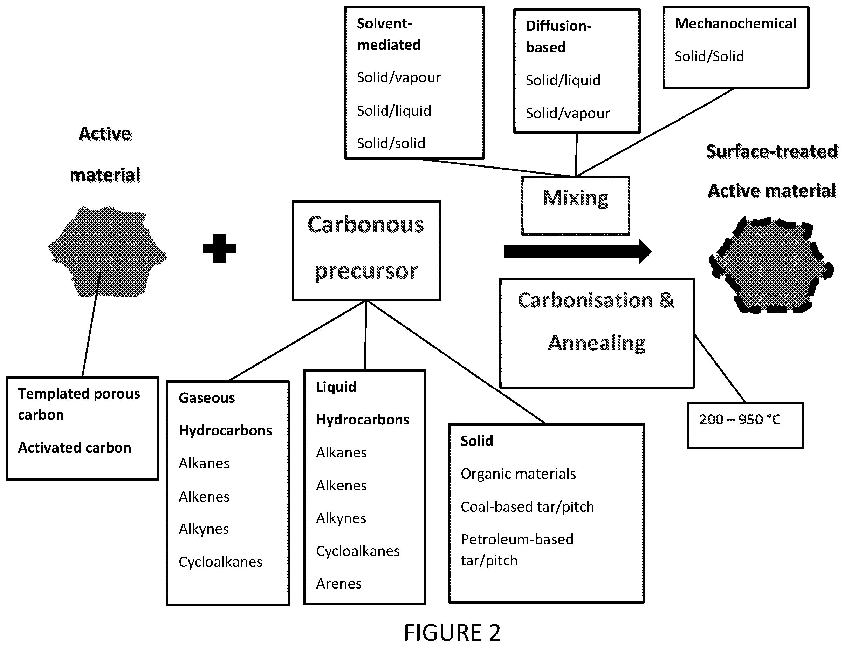

Figure 2 shows a flow chart to illustrate a preferred process of the present invention.

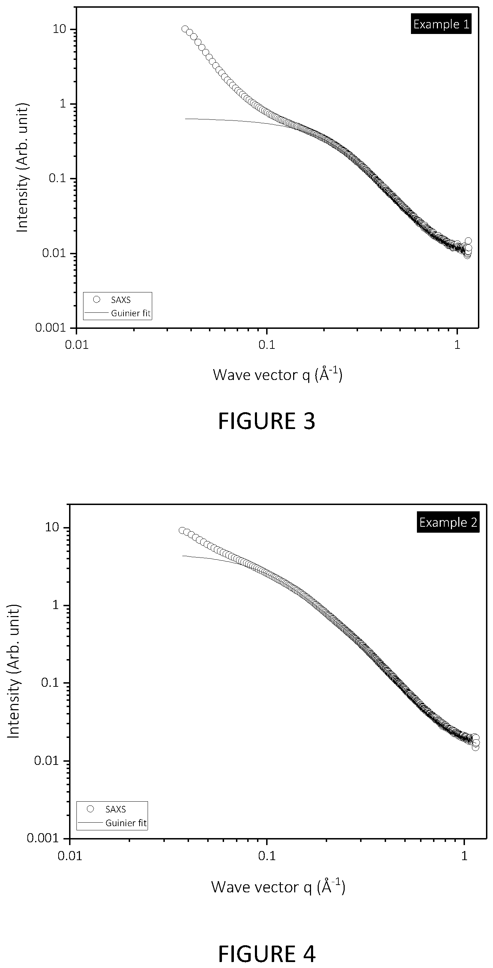

Figure 3 is a graph showing the Small-angle X-ray scattering (SAXS) data for Example 1 from Table 3.
Figure 4 is a graph showing the Small-angle X-ray scattering (SAXS) data for Example 2 from Table 3.

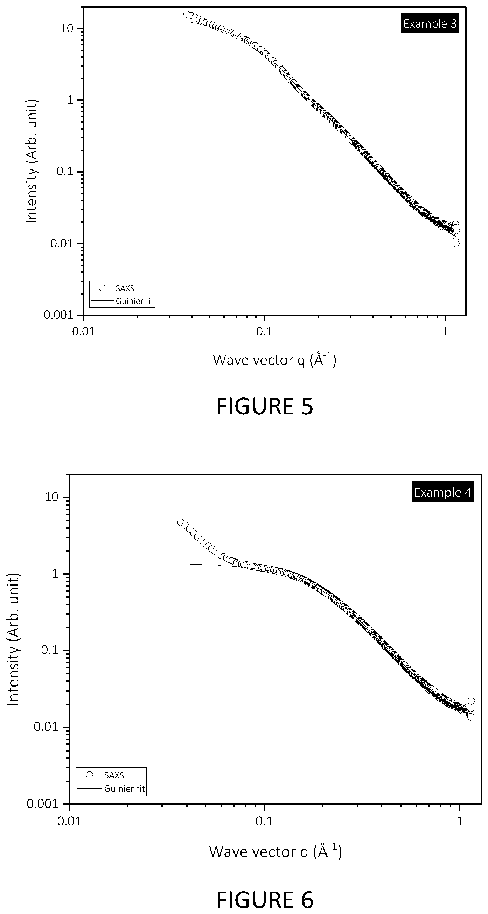

Figure 5 is a graph showing the Small-angle X-ray scattering (SAXS) data for Example 3 from Table 3.
Figure 6 is a graph showing the Small-angle X-ray scattering (SAXS) data for Example 4 from Table 3

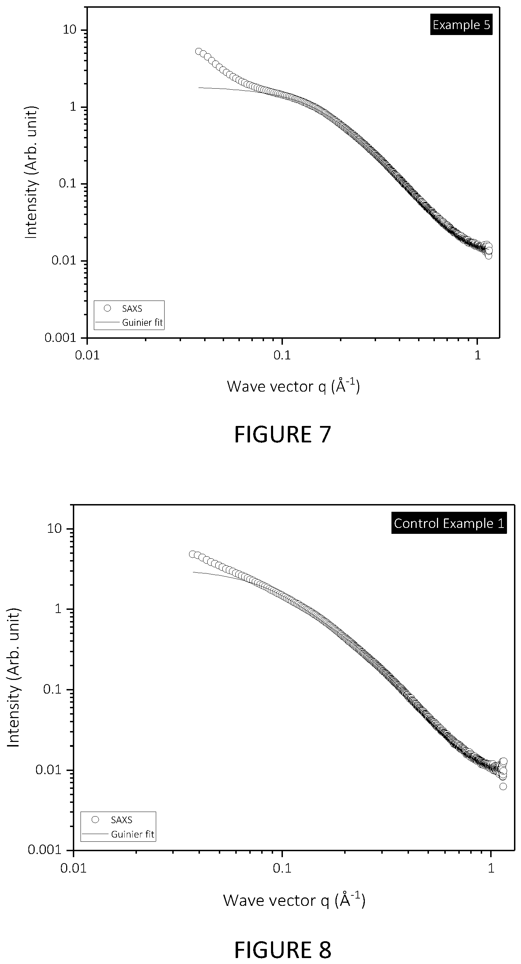

Figure 7 is a graph showing the Small-angle X-ray scattering (SAXS) data for Example 5 from Table 3.
Figure 8 is a graph showing the Small-angle X-ray scattering (SAXS) data for Control Example 1 from Table 3.

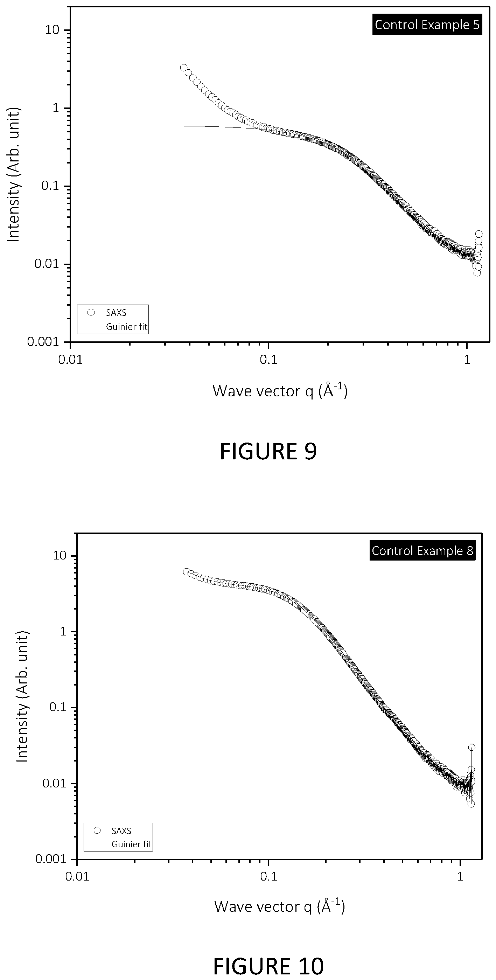

Figure 9 is a graph showing the Small-angle X-ray scattering (SAXS) data for Control Example 5 from Table 3.
Figure 10 is a graph showing the Small-angle X-ray scattering (SAXS) data for Control Example 8 from Table 3.

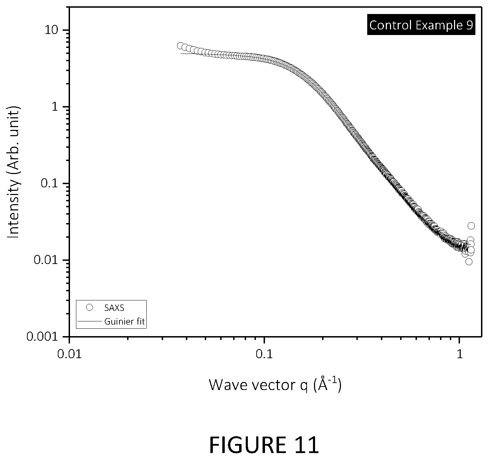

Figure 11 is a graph showing the Small-angle X-ray scattering (SAXS) data for Control Example 9 from Table 3.
Figure 12 shows the X-ray Diffraction (XRD) data for Example 1 according to Table 1.
Figure 13 shows the XRD data for Example 2 according to Table 1
Figure 14 shows the XRD data for Example 3 according to Table 1
Figure 15 shows the XRD data for Example 4 according to Table 1.
Figure 16 shows the XRD data for Example 5 according to Table 1.
Figure 17 shows the XRD data for Control Example 1 according to Table 1.
Figure 18 shows the XRD data for Control Example 4 according to Table 1.
Figure 19 shows the XRD data for Control Example 5 according to Table 1.
Figure 20 shows the XRD data for Control Example 8 according to Table 1.
Figure 21 shows the XRD data for Control Example 9 according to Table 1.
Figure 22 shows the XRD reference data for MgO by-product deposit.
Figure 23 shows an image of the porogenic MgO substance, corresponding to the XRD in Figure 22.

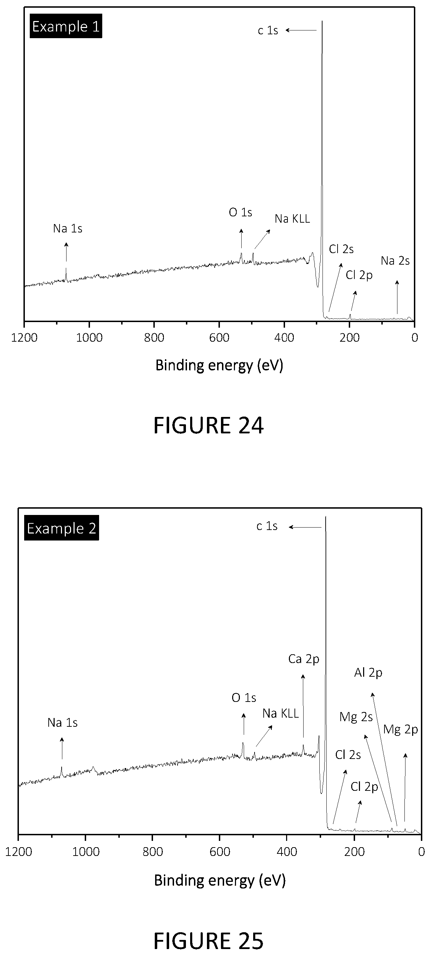

Figure 24 shows the X-ray Photoelectron Spectroscopy (XPS) data for Example 1 from Table 3.
Figure 25 shows the XPS data for Example 2 from Table 3.

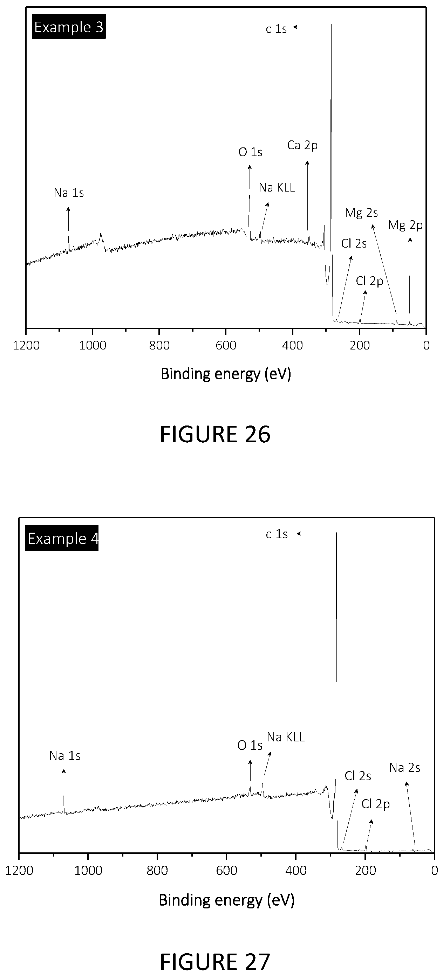

Figure 26 shows the XPS data for Example 3 from Table 3.
Figure 27 shows the XPS data for Example 4 from Table 3.

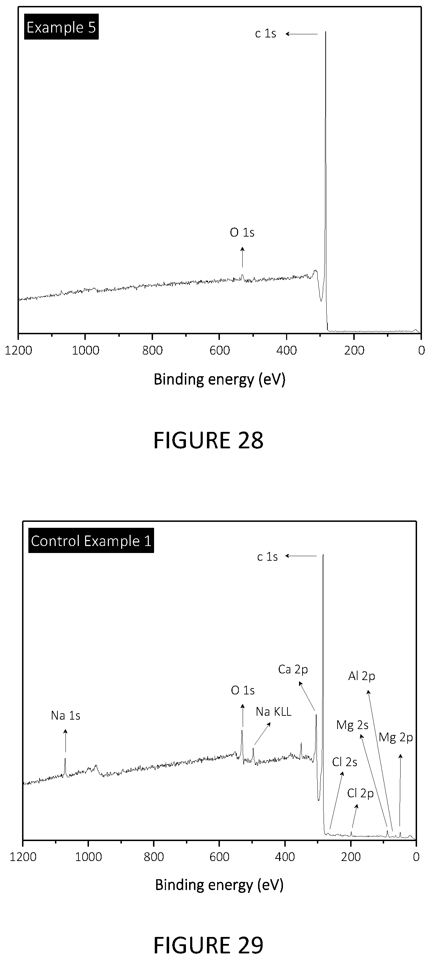

Figure 28 shows the XPS data for Example 5 from Table 3.
Figure 29 shows the XPS data for Control Example 1 from Table 3.

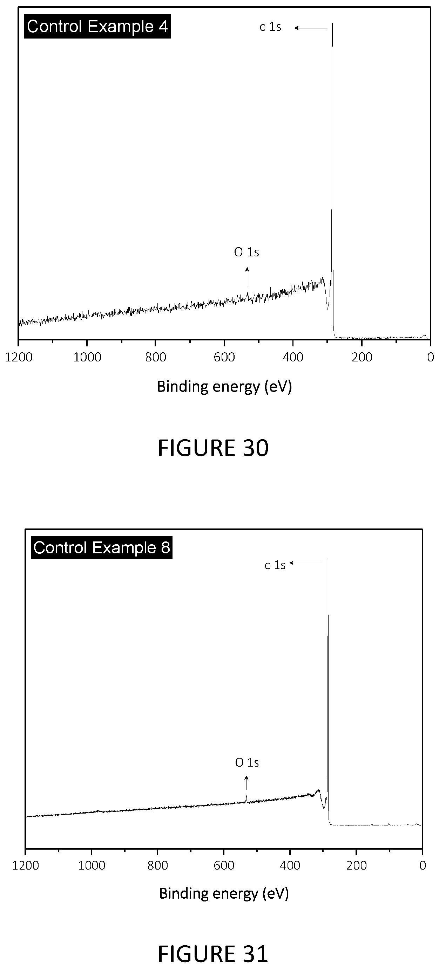

Figure 30 shows the XPS data for Control Example 4 from Table 3.
Figure 31 shows the XPS data for Control Example 8 from Table 3.

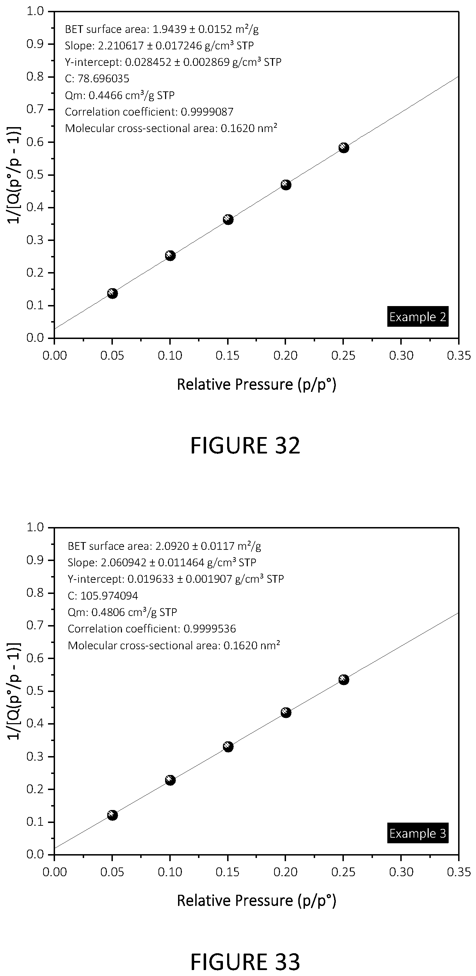

Figure 32 shows the BET N₂ adsorption and corresponding specific surface area data for Example 2 from Table 3.
Figure 33 shows the BET N₂ adsorption data and corresponding micropore specific surface area for Example 3 from Table 3.

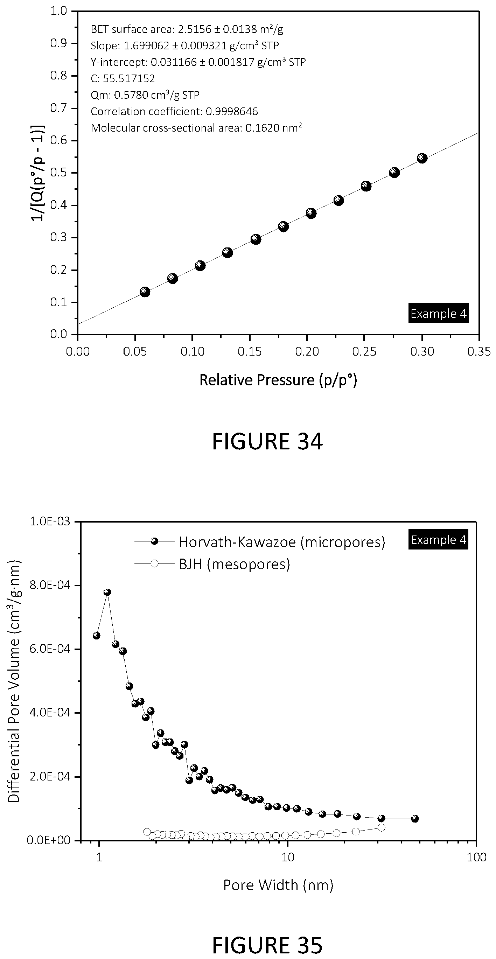

Figure 34 shows the BET N₂ adsorption and corresponding specific surface area data for Example 4 from Table 3.
Figure 35 shows the BET N₂ adsorption and corresponding micropore specific surface data for Example 4 from Table 3.

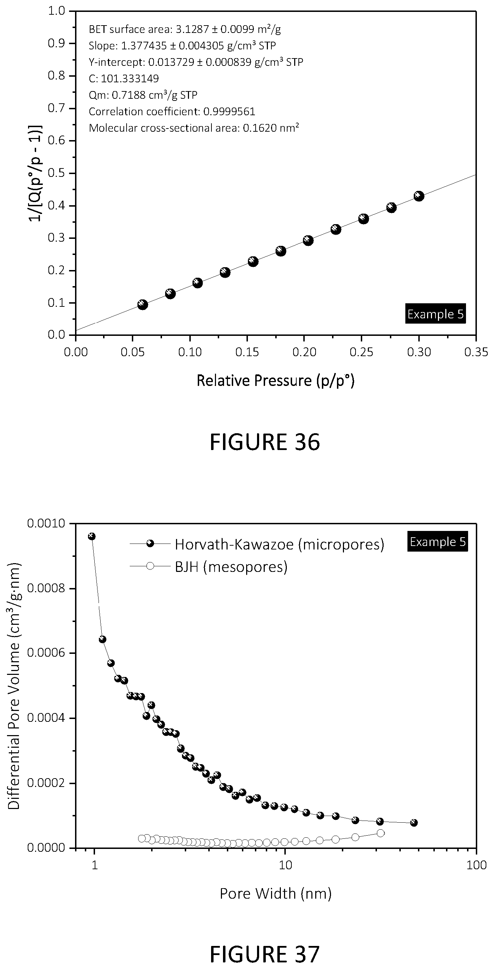

Figure 36 shows the BET N₂ adsorption and corresponding specific surface area data for Example 5 from Table 3.
Figure 37 shows the BET N₂ adsorption data and corresponding micropore specific surface area for Example 5 from Table 3.

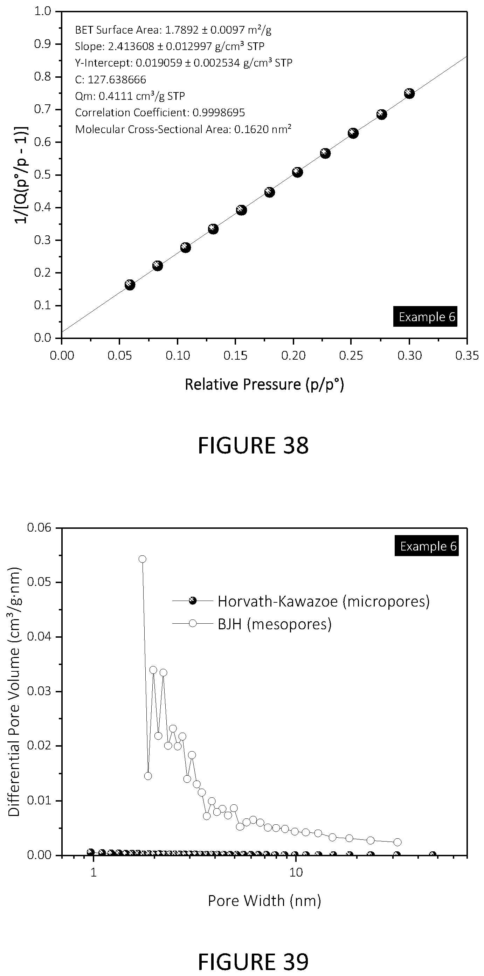

Figure 38 shows the BET N₂ adsorption and corresponding specific surface area data for Example 6 from Table 3.
Figure 39 shows the BET N₂ adsorption data and corresponding micropore specific surface area for Example 6 from Table 3.

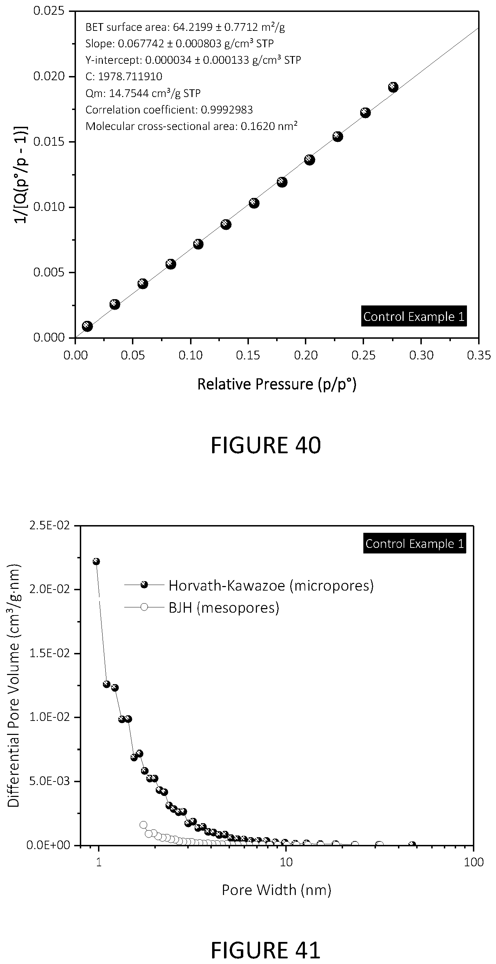

Figure 40 shows the BET N₂ adsorption and corresponding specific surface area data for Control Example 1 from Table 3.
Figure 41 shows the BET N₂ adsorption and corresponding micropore specific surface area data for Control Example 1 from Table 3.
Figure 42 shows an image of a plating-free anode electrode dismantled from a 9.5 mAh three-electrode full cell, after sodiation of ca. 410 mAh/g and a subsequent desodiation of ca. 407 mAh/g, according to current invention (Example 4 with Electrolyte 1, cell 005 from Table 5)
Figure 43 shows the electrochemical data of a three-electrode Na-ion full-cell according to the features of Example 3 with Electrolyte 1 according to Table 5 (cell 004).

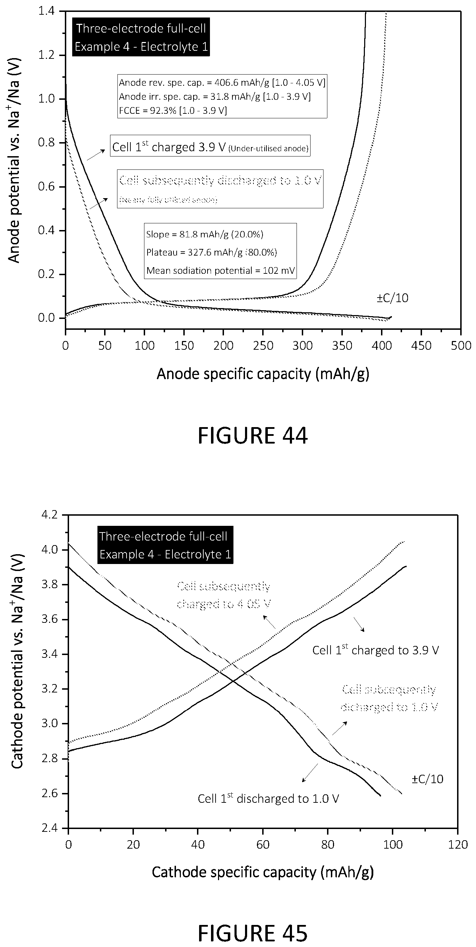

Figure 44 shows the electrochemical data of the anode in a three-electrode Na-ion full-cell according to the features of Example 4 with Electrolyte 1 according to Table 5 (cell 005).
Figure 45 shows the electrochemical data of the cathode in a three-electrode Na-ion full-cell according to the features of Example 4 with Electrolyte 1 according to Table 5 (cell 005).

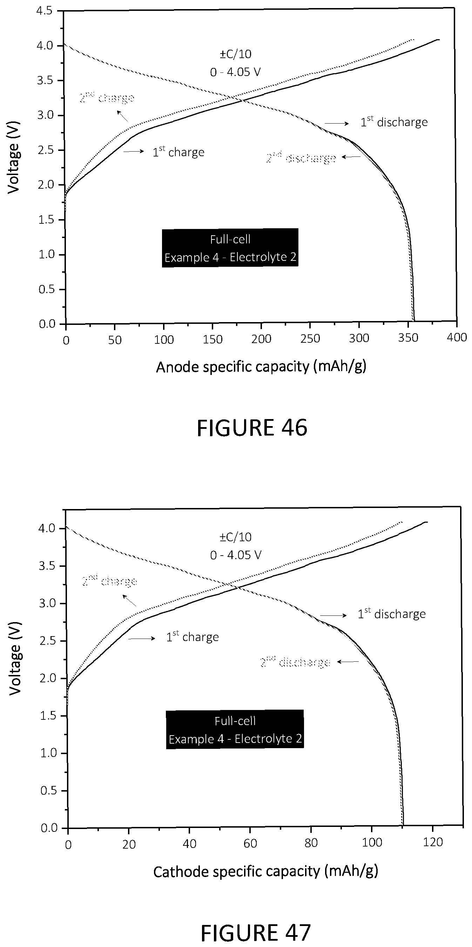

Figure 46 shows the electrochemical data of the anode in a three-electrode Na-ion full-cell according to the features of Example 4 with Electrolyte 2 according to Table 5 (cell 007).
Figure 47 shows the electrochemical data of the cathode in a three-electrode Na-ion full-cell according to the features of Example 4 with Electrolyte 2 according to Table 5 (cell 007).

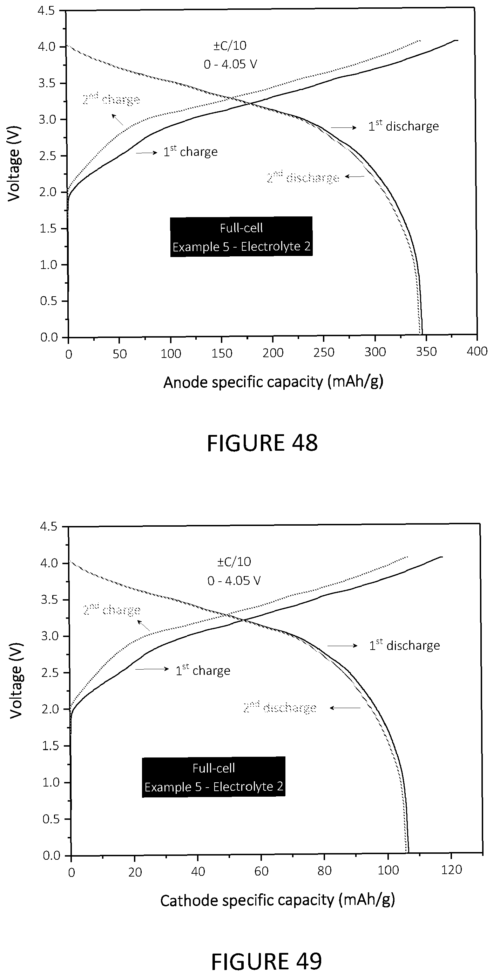

Figure 48 shows the electrochemical data of the anode in a three-electrode Na-ion full-cell according to the features of Example 5 with Electrolyte 2 according to Table 3 (cell 008).
Figure 49 shows the electrochemical data of the cathode in a three-electrode Na-ion full-cell according to the features of Example 5 with Electrolyte 2 according to Table 3 (cell 008).

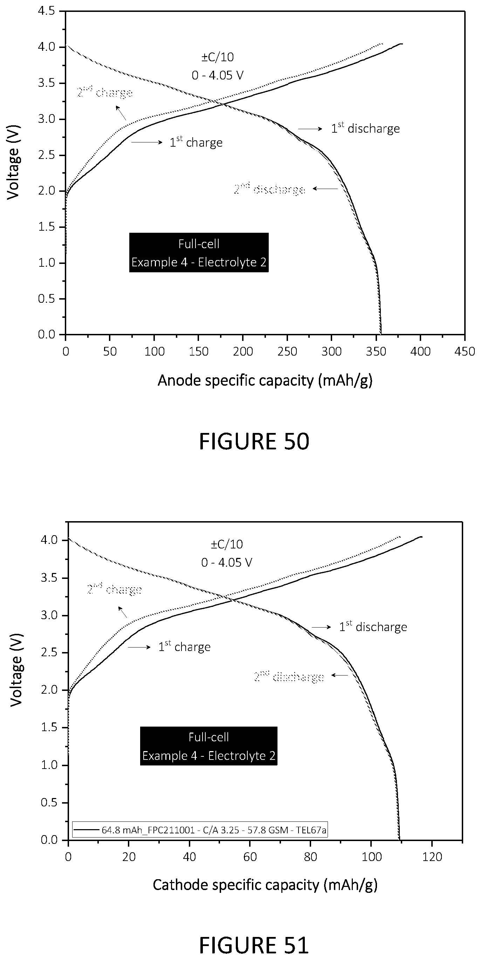

Figure 50 shows the electrochemical data of the anode in a three-electrode Na-ion full-cell according to the features of Example 4 with Electrolyte 2 according to Table 3 (cell 009).
Figure 51 shows the electrochemical data of the cathode in a three-electrode Na-ion full-cell according to the features of Example 4 with Electrolyte 2 according to Table 3 (cell 009).

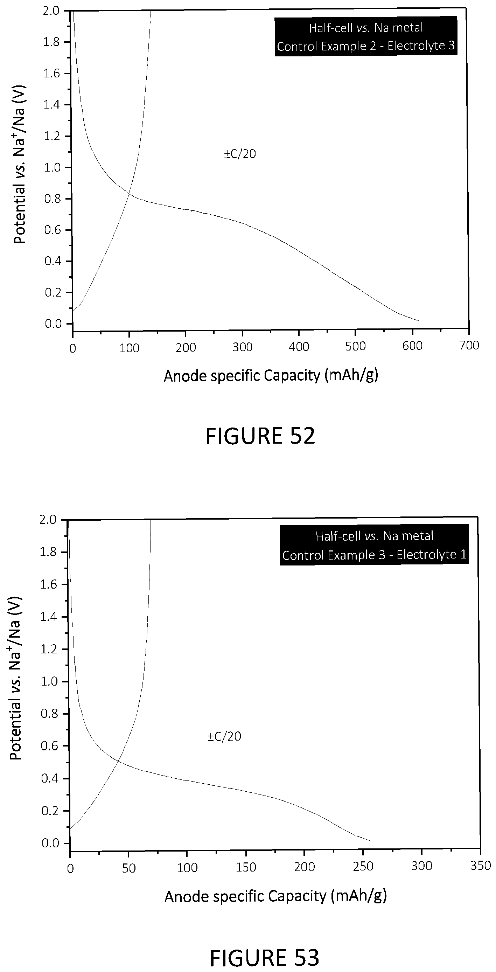

Figure 52 shows the electrochemical data of the anode for a Half-cell vs Na metal for Control Example 2 with Electrolyte 3 according to Table 5 (cell 012).
Figure 53 shows electrochemical data of the anode for a Half-cell vs Na metal for Control Example 3 with Electrolyte 1 according to Table 5 (cell 013).
Figure 54 shows electrochemical data of the anode for a Half-cell vs Na metal for Example 6 with Electrolyte 1 according to Table 5 (cell 010).
Figure 55 shows the anode gravimetric capacity against cycle for a Half-cell vs Na metal for Example 2 with Electrolyte 1 according to Table 5 (cell 002).
Figure 56 shows the anode gravimetric capacity against cycle for a Half-cell vs Na metal for Example 3 with Electrolyte 1 according to Table 5 (cell 004).
Figure 57 shows the anode specific capacity against cycle for a Half-cell vs Na metal for Example 4 with Electrolyte 1 and 2 according to Table 5 (cell 006 (white dots) and 007 (black dots)).
Figure 58 shows the anode gravimetric specific capacity against cycle for a Half-cell vs Na metal for Example 5 with Electrolyte 2 according to Table 5 (cell 008).
Figure 59 shows the anode specific capacity against cycle for a Half-cell vs Na metal for Example 4 with Electrolyte 2 according to Table 5 (cell 009).

### DETAILED DESCRIPTION

### PROPOSED MODEL FOR THE STRUCTURE OF THE CARBON-CONTAINING ANODE

### MATERIALS ACCORDING TO THE PRESENT INVENTION

Figure 1 shows a schematic representation of a grain of pristine carbon-containing material comprising a core comprising primary carbon-containing material. Figure 1 further shows a schematic representation of a grain of surface engineered carbon-containing anode material 10 (i.e., non-pristine) according the present invention comprising a core comprising primary carbon-containing material 1 and an outer surface 15 comprising carbonised material 35 chemically bonded on the primary carbon-containing material 1. More particularly, Figure 1 provides assistance to explain a proposed mechanism for how it may be possible for the surface engineered carbon-containing anode materials according to the present invention 10 to exhibit a significantly reduced open micropore surface area, whilst at the same time recording a minimal reduction in the overall surface area. Figure 1 may also assist to explain how the surface engineered carbon-containing anode material according to the present invention 10 has a greater resistance to moisture adsorption compared with the pristine carbon-containing material comprising a core comprising primary carbon-containing material 1.

A representative grain of pristine carbon-containing material comprising a core comprising primary carbon-containing material 1 with open porosity, as depicted in Figure 1, may have an irregular and uneven outer surface 15 formed with a plurality of open mesopores 20, and a plurality of open micropores 25. Following the treatment of the pristine carbon-containing material comprising a core comprising primary carbon-containing material 1, for example in accordance with the method of the present invention, a non-uniform, incomplete and extremely thin layer 30 of particles of carbonised material 35 (for example derived from secondary carbon-containing material) is deposited on the outer surface 15 of the pristine carbon-containing material comprising a core comprising primary carbon-containing material 1 to produce surface engineered carbon-containing anode material 10 according to the present invention.

As shown in Figure 1, the entrance to many of the open micropores 25 is blocked by the deposited particles of carbonised material 35 that form the extremely thin layer 30. Blocked micropores are indicated as 55 on the surface engineered carbon-containing anode material 10 in Figure 1. It is understood that the extreme thinness of the non-uniform, incomplete layer 30 will make it highly unlikely to be sufficient to cover over/block the entrance to the larger mesopores 20, but the layer 30 may instead partially coat the inside of the mesopore which may reduce the surface area of these pores, but only slightly.

Increased hydrophobicity of the surface engineered carbon-containing anode materials according to the present invention can also be explained by the fact that a reduced number of water molecules 40a are able to enter the plugged or blocked micropores 55, compared with the number of water molecules 40 that are able to enter the open micropores 25 in the pristine primary carbon-containing material 1, thereby making the surface engineered carbon-containing material according to the present invention 10 more resistant to moisture than non-surface engineered material.

### GENERAL METHOD FOR PREPARING THE TEMPLATED CARBON CORE FOR THE CARBON-CONTAINING ANODE MATERIALS ACCORDING TO THE PRESENT INVENTION

In a typical process, glucose is mixed with magnesium gluconate (Mg(C₆H₁₁O₇)₂·xH₂O), and the resulting mixture is subject to an initial carbonisation at 600 °C for 60 -120 min to carbonise the carbon- and porogenic substance-containing starting materials. The use of magnesium gluconate (Mg(C₆H₁₁O₇)₂·xH₂O) led to the in-situ formation of MgO as a pyrogenic substance.

The resulting carbonised material is then milled to a D50 of ca. 9 µm and demineralised in a boiling (ca. 100 °C) aqueous solution of HCl with a concentration of 1.0 - 2.0 M for 60 -120 min. After rinsing the powder in deionised water, the demineralised carbonised material is pyrolysed at 1450 °C for 60 min under a flow of argon to yield a templated porous carbon material. Specific details of these steps are indicated in Table 1.

### GENERAL METHOD FOR PREPARING THE NON-TEMPLATED CARBON CORE FOR THE CARBON-CONTAINING ANODE MATERIALS NOT ACCORDING TO THE PRESENT INVENTION

In a typical process, a carbon-containing starting material such as a biochar, a carbohydrate or a phenolic resin is carbonised at 600 °C for 60 -120 min. The carbonised material is then milled to a D50 of ca. 9 µm and, where needed, demineralised in a boiling (ca. 100 °C) aqueous solution of HCl with a concentration of 1.0 - 2.0 M for 60 -120 min. After rinsing the powder in deionised water, the demineralised carbonised materials are pyrolysed at 1100 - 3000 °C for 60 min under a flow of argon to yield a non-templated carbon. Specific details of these steps are indicated in Table 1.

### GENERAL METHOD FOR PREPARING THE ACTIVATED CARBON CORE FOR THE CARBON-CONTAINING ANODE MATERIALS ACCORDING TO THE PRESENT INVENTION

Two types of commercial activated carbons were used here, details of which are provided in Table 3. In the case of the 'Activated carbon B', the material had an iodine update of ca. 610 mg/g and a D₅₀ of ca. 8 µm.

### GENERAL METHOD FOR SURFACE TREATMENT OF THE CORE FOR THE CARBON-CONTAINING ANODE MATERIALS ACCORDING TO THE PRESENT INVENTION

In a typical process, a core that comprises one or more primary carbon-containing materials according to the present invention in particulate form are treated at 200 to 950 °C for 30-120 min with one or more secondary carbon-containing materials. Ideally, the treatment process is conducted in a mostly inert gas atmosphere. Further ideally, the one or more secondary carbon-containing materials are provided at the required concentration (as discussed above), and gaseous secondary carbon-containing material are preferably provided in a carrier gas (preferably an inert carrier gas), and liquid secondary carbon-containing material are preferably provided in a carrier solvent or other carrier liquid.

A preferred treatment process involves the use of an inert gas (e.g., argon) and a secondary carbon-containing material that comprises an alkane of the formula CₙH₂ₙ₊₂ where 1 ≤ n ≤ 10). This secondary carbon-containing material is used in the examples of Table 1 (where relevant). This treatment is preferably performed for a period of 30 minutes and at a temperature of about 830 °C as indicated in Table 1. Details of carbon-containing anode materials which were tested are given in Table 1 below:

**TABLE 1 - SUMMARY OF MATERIAL SYNTHESIS**

| Experimental material | Carbon-containing starting material | Porogenic substance | Initial heat treatment (carbonisation) | Demineralisation | Pyrolysis/annealing | Primary carbon containing material (core) | Surface treatment |
|---|---|---|---|---|---|---|---|
| Exp 1 | C₆H₁₂O₆ | MgO formed from Mg(C₆H₁₁O₇)₂·xH₂O | HTC 200 °C \| 120 min + 600 °C \| 60-90 min | Boiling 2.0 M HCl | 1450 °C \| 60 min | Templated hard carbon 1 | 830 °C \| 30 min |
| Exp 2 | C₆H₁₂O₆ | MgO formed from Mg(C₆H₁₁O₇)₂·xH₂O | 600 °C \| 60-120 min | Sonication \| 1.0 M HCl | 1450 °C \| 60 min | Templated hard carbon 2 | 830 °C \| 30 min |
| Exp 3 | C₆H₁₂O₆ | MgO formed from Mg(C₆H₁₁O₇)₂·xH₂O | 600 °C \| 60-120 min | None | 1450 °C \| 60 min | Templated hard carbon 3 | 830 °C \| 30 min |
| Exp 4 | C₆H₁₂O₆ | MgO formed from Mg(C₆H₁₁O₇)₂·xH₂O | 600 °C \| 60-120 min | Boiling 2.0 M HCl | 1450 °C \| 60 min | Templated hard carbon 4 | 830 °C \| 30 min |
| Exp 5 | C₆H₁₂O₆ | MgO formed from Mg(C₆H₁₁O₇)₂·xH₂O | 600 °C \| 60-120 min | Boiling 2.0 M HCl | 1450 °C \| 60 min | Templated hard carbon 5 | 830 °C \| 30 min |
| Exp 6 | - | - | - | - | - | Activated carbon B | 830 °C \| 30 min |
| Control Exp 1 | C₆H₁₂O₆ | - | 600 °C \| 60-120 min | Sonication \| 1.0 M HCl | 1450 °C \| 60 min | Templated hard carbon 2 | None |
| Control Exp 2 | - | - | - | - | - | Activated carbon A | 830 °C \| 30 min |
| Control Exp 3 | - | - | - | - | - | Activated carbon B | - |
| Control Exp 4 | - | - | - | - | - | Hard carbon 1 (commercially available) | 830 °C \| 30 min |
| Control Exp 5 | Phenolic resin | - | 600 °C \| 60-120 min | - | 1450 °C \| 60 min | Hard carbon 2 | 830 °C \| 30 min |
| Control Exp 6 | - | - | - | - | 1450 °C \| 60 min | Hard carbon 3 | 830 °C \| 30 min |
| Control Exp 7 | - | - | - | - | >2000 °C \| 60 min | Hard carbon 1 | 830 °C \| 30 min |
| Control Exp 8 | - | - | - | - | >2000 °C \| 60 min | Hard carbon 1 | - |
| Control Exp 9 | - | - | - | - | >2500 °C \| 60 min | Hard carbon 1 | - |

### MEASUREMENT OF SIZE OF PRIMARY CARBON CONTAINING MATERIAL

Size measurement of the primary hard carbon containing material (core material) was carried out using laser diffraction and Scanning Electron Microscopy. The results obtained showed that experimental materials 1 to 6 resulted in a particle size distribution as indicated below:

| Parameter | Preferred lower end point | Preferred upper end point |
|---|---|---|
| D10 [µm] | 0.01 | 4 |
| D50 [µm] | 4 | 15 |
| D90 [µm | 15 | 30 |

When the one or more primary carbon-containing materials comprise one or more carbon composite materials represented by: (carbon)-X, as disclosed herein, the particle size distribution may, in some instances, be different to those indicated above. This is because the size of some of the composite materials may be in the nanoscale range. Therefore, in one embodiment, a particle size distribution of the primary carbon containing materials of the present invention is from about 1nm to about 30 µm, preferably from about 1nm to about 20 µm.

To the best of the Applicant's knowledge, the surface treatment of the present invention does not substantially alter the particle size distribution of the primary carbon containing material. In one example of the present invention, the mass deposit of the secondary carbon containing material was found to be very small (2.2 ± 0.8 wt.% per 30 min of deposition). Therefore, the particle size distribution of the primary carbon containing material, post surface treatment, (that is, the carbon-containing anode materials according to the present invention) can be considered as being essentially the same as the particle size distribution of the primary carbon containing material, pre surface treatment.

### PRODUCT ANALYSUS USING XPS: MEASUREMENT OF SURFACE CARBON, OXYGEN AND INORGANIC CONTENT (atm.%)

The amount of carbon, oxygen and inorganic content (atm. %) present on the surface of the experimental materials 1 to 6 and control experimental materials 1 to 9 was measured using XPS with analysis specifications summarised in Table 2 below. The surface carbon, oxygen and inorganic content results are shown in Table 3.

**TABLE 2**

| Instrument make/model | Kratos Axis Supra |
|---|---|
| X-ray source | Al |
| X-ray source energy | 1486.7 eV |
| X-ray source strength | 150 W |
| X-ray source spot size | 700 µm x 300 µm |
| Analysis spot size | 700 µm x 300 µm |
| Charge control | Electronic charge neutralization using magnetic immersion lens. Filament current = 0.27 A, charge balance = 3.3 V, filament bias = 3.8 V. |
| Analysis pressure | < 10⁻⁸ Torr/PSI |
| Analyser type | Spherical sector |
| Detector | Multichannel resistive plate |
| Number of detector elements | 3 MCP, 128 channel DLD |
| Temperature during analysis | 294 K |
| Survey spectra pass energy | 160 |
| Region spectra pass energy | 20 |
| Mounting/ex-situ preparation | Samples were mounted onto copper tape inside a front mounted glovebox filled with N₂ |
| In-situ preparation | N/A |
| Elements analysed | C, O, Si |
| Auger regions analysed | N/A |
| Samples analysed | 8 |

### PRODUCT ANALYSIS USING BET: MEASUREMENT OF BET SURFACE AREA (m²/g)

BET analysis was carried out using a Micromeritics Gemini VII 2390 surface area analyser using Nitrogen as the adsorbate at liquid nitrogen temperature. All samples were degassed at 250 °C under flowing nitrogen overnight prior to analysis. The results obtained are shown in Table 3.

### PRODUCT ANALYSIS USING BET: MEASUREMENT OF BET MICROPORE SURFACE AREA (m²/g)

From the volume of gas adsorbed by the materials, it is possible - by applying models - to estimate the surface area of micropores accessible to the gas (the open micropores, aka the micropores at the surface of the carbon-containing anode material), calculated per gram of the carbon-containing anode material (or pristine hard carbon-containing material in the case of the control samples). This was achieved from 't-Plot' analysis. A typical t-Plot consists of the quantity of gas adsorbed at standard temperature and pressure vs. Harkins and Jura statistical thickness (nm)) according to the Harkins and Jura thickness equation (t = [ 13.99 / ( 0.034 - log(p/p°) ) ] ^ 0.5). The difference between the external surface area and the BET (total) surface area is the estimated micropore surface area. The results obtained are shown Table 3 along with corresponding plots in the Figures.

### PRODUCT ANALYSIS USING SAXS

Small Angle X-ray Scattering (SAXS) measurements were made on a Xenocs Xeuss 2.0 equipped with a Cu k_{α} source collimated by two sets of scatterless slits. A Pilatus 300k detector mounted on a translation stage was used to record the scattered signal. Measurements were made with multiple sample-to-detector distances with the results provided here measured at 0.339(2) m. Samples were mounted in a 0.9 mm thick metal sample holder and enclosed between sticky Kapton windows and measured for 10 minutes. The sample chamber was held under vacuum during the measurements. Masks were applied to the collected 2d images which were then radially integrated as a function of *q* to produce 1d intensity versus q plots. These were then corrected for transmission and background scattering.

### PRODUCT ANALYSIS USING XRD

Analysis by X-ray diffraction techniques was conducted using a Siemens D5000 powder diffractometer to confirm that the desired target materials had been prepared, to establish the phase purity of the product material and to determine the types of impurities present. From this information it is possible to determine the unit cell lattice parameters.

The general XRD operating conditions used to analyse the precursor electrode materials are as follows:
Slits sizes: 1 mm, 1 mm, 0.1 mm
Range: 20 = 5 ° - 60 °
X-ray Wavelength = 1.5418 Å (Cu Kα)
Speed: 0.5 to 2 seconds/step
Increment: 0.015o to 0.05 °

The results obtained are shown as plots in the Figures.

**TABLE 3 - PRODUCT ANALYSIS**

| | | | BET N₂ adsorption | | | | XPS | | | SAXS |
|---|---|---|---|---|---|---|---|---|---|---|
| Experimental material | Core | Surface treatement | Specific surface area | Total volums of pores < 39.6 nm | Micropore specific surface area | Micropore volume | Carbon content | Qxygen content | Inorganic content | Radius of spherical pores |
| | | | m²/g | cm³/g | m²/g | cm³/g | atm.% | atm.% | atm.% | Å |
| Exp 1 | T-HC | Y | --- | --- | --- | --- | 97.36 | 1.60 | 0.95 | 9.3 ± 1.3 |
| Exp 2 | T-HC | Y | 1.94 | --- | --- | --- | 94.66 | 2.49 | 2.85 | 18.1 ± 1.3 |
| Exp 3 | T-HC | Y | 2.09 | --- | --- | --- | 91.43 | 4.99 | 3.58 | 25.8 ± 2.6 |
| Exp 4 | T-HC | Y | 2.52 | 0.0050 | < 0.1 | < 0.00002 | 96.97 | 1.55 | 1.48 | 10.6 ± 1.3 |
| Exp 5 | T-HC | Y | 3.13 | 0.0061 | < 0.1 | < 0.00002 | 98.89 | 1.11 | BDL* | 12.5 ± 1.3 |
| Exp 6 | AC | Y | 1.79 | 0.0031 | < 0.1 | 0.000023 | --- | --- | --- | --- |
| Control Exp 1 | T-HC | N | 64.22 | 0.0393 | 18.8941 | 0.008968 | 90.70 | 4.67 | 4.63 | 20.8 ± 6.5 |
| Control Exp 2 | AC | Y | > 1000 | --- | --- | --- | --- | --- | --- | --- |
| Control Exp 3 | AC | N | about 650 | 0.2456 | 260.5060 | 0.136527 | --- | --- | --- | --- |
| Control Exp 4 | NT-HC | Y | 2.36 | 0.0044 | 0.1392 | 0.00006 | 99.38 | 0.62 | BDL | --- |
| Control Exp 5 | NT-HC | Y | --- | --- | --- | --- | --- | --- | --- | 8.8 ± 1.3 |
| Control Exp 8 | NT-HC | N | 2.51 | 0.0052 | < 0.1 | 0.000023 | 98.48 | 0.82 | 0.69 | 15.4 ± 1.3 |
| Control Exp 9 | NT-HC | N | --- | --- | --- | --- | --- | --- | --- | 15.1± 3.9 |

| | | | | | | | | | | |
|---|---|---|---|---|---|---|---|---|---|---|
| T-HC = templated hard carbon; AC = activated carbon; NT-HC = non-templated hard carbon; *BDL = below detection limit; Y = Yes; N = No. | | | | | | | | | | |

### GENERAL CONCLUSIONS FROM THE PRODUCT ANALYSIS RESULTS AS INDICATED IN TABLE 3

Table 3 summarises the product analysis results from the materials of Table 1. In particular, Table 3 indicates the analysis results obtained using BET N₂ adsorption, XPS and SAXS techniques.

### Average pore size

Average pore size results obtained for materials having a templated hard carbon core unexpectedly displayed a larger average pore size (Å) than comparative materials having a non-templated hard carbon core. For instance, templated material 5 resulted in a pore size of 12.5 ± 1.3 Å, compared to a pore size of 8.8 ± 1.3 Å for control material 5, which was prepared under the same conditions as templated material 5 (albeit without the use of a porogenic substance to effect templating). Thus, the process of templating hard carbon appears to increase the average pore by ca. 40%.

It is important however that when this comparison is made that the pyrolysis temperatures are identical. This is because SAXS-derived pore radii noticeably depend on pyrolysis temperature and higher pyrolysis temperatures result in pore enlargement.

### Micropore specific surface area & micropore volume

Micropore specific surface area (m²/g) and micropore volume (cm³/g) results obtained for materials having a templated hard carbon core that was surface treated unexpectedly displayed a lower specific surface area and micropore volume than a comparative no-templated hard carbon core that was surface treated. For instance, this is observed by comparing the results obtained for experimental material 4 and 5 with control material 4.

### XPS data

The XPS data obtained for experimental materials 1 to 5 was found to be in conformity with the methods that were used to prepare these templated hard-carbon materials. For instance, higher levels of carbon content (i.e., 94 atm. % or more) and lower levels of inorganic content (i.e., 3 atm. % or less) were observed for those materials that have been subject to a demineralisation step, compared to those that had not (i.e., experimental material 3).

Furthermore, experimental materials 1, 4 and 5 that made use of boiling 2.0 M HCl in the demineralisation step appeared to show higher levels of carbon content and lower levels of inorganic content than experimental material 2 that made use of sonication using 1.0 M HCl in the demineralisation step. The results observed for the oxygen content followed the same trends.

### XRD data

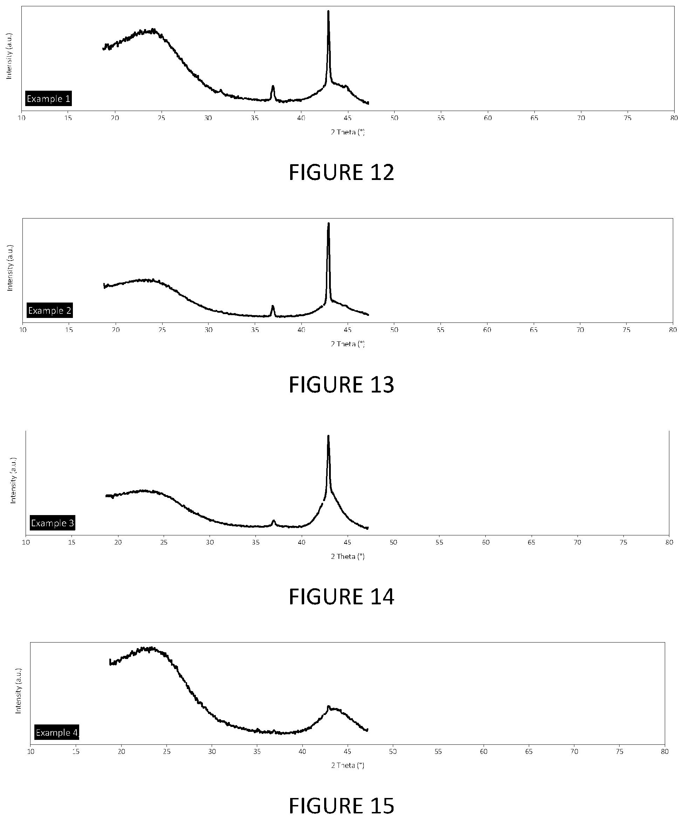

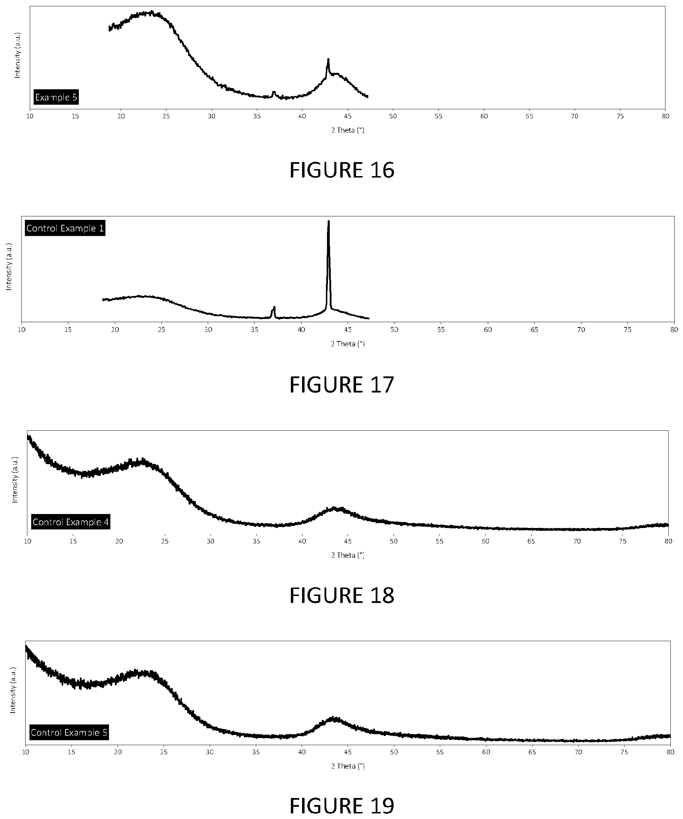

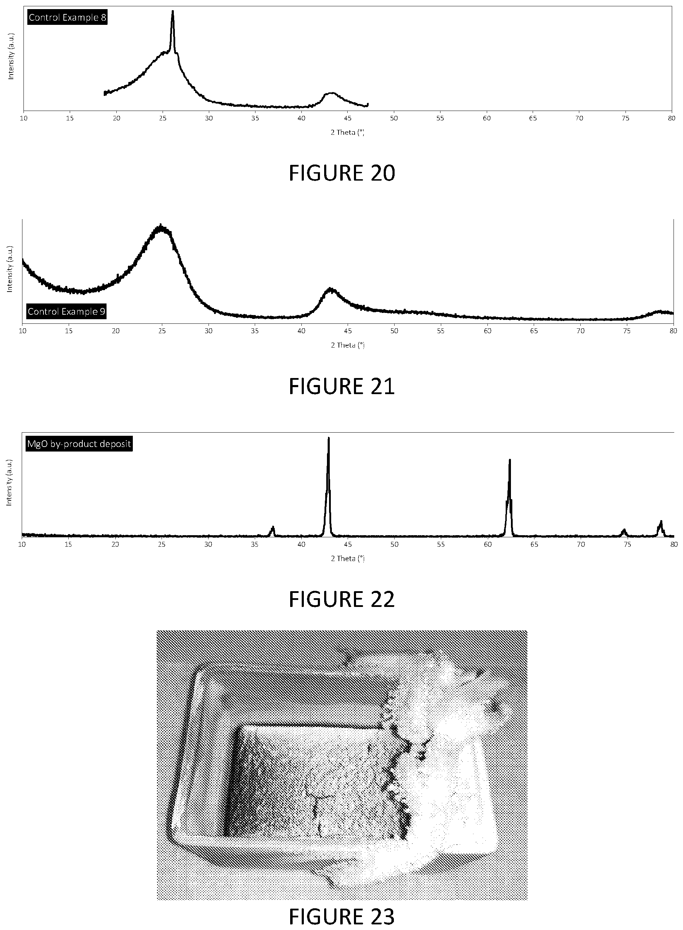

Figures 12 to 16 show the XRD plots obtained for experimental materials 1 to 5. Each plot indicates the evidence of a hard carbon structure as is evident by the broad peak shown between 20 to 25 °. The plots also indicate the presence of sharp peak between 40 to 45 ° which is an indication of MgO arising from the templating process. The presence of MgO arising from the use of Mg(C₆H₁₁O₇)₂·xH₂O was also confirmed by XRD analysis of the impurities that were obtained from demineralisation as shown by Figure 22. The impurities are shown by Figure 23. The XRD indicates the presence of the same sharp peak between 40 to 45 ° as observed in Figures 12 to 16.

### ELECTROCHEMICAL RESULTS

Anodes comprising carbon-containing materials made according to the present invention are prepared by solvent-casting a slurry comprising an experimental carbon-containing material (as described above), binder and conductive additive.

Polyvinylidene fluoride (PVDF) and Styrene-Butadiene Rubber/Carboxymethylcellulose (SBR/CMC) are suitable binders. N-Methyl-2-pyrrolidone (NMP) alone, water alone, or mixtures of NMP and water may be employed as the solvent. A conductive additive such as C65^{™} carbon (Timcal) (RTM) was used in the slurry.

Experimental carbon-containing material (as described above), binder and conductive additive were mixed and homogenised in a weight ratio of A:B:C, wherein A, B and C are between 80 and 98; 1 and 19; and 1 and 19 respectively. Specifically, a 92:6:2 ratio and a 95:3.5:1.5 ratio were used in the cases of slurries comprising PVDF and SBR/CMC respectively.

The slurry was then cast onto a current collector foil Specifically, pristine or carbon-coated aluminium foil was found suitable. The said cast slurry was then heated until most of the solvent evaporated, and an electrode film was formed. The anode electrode was then dried further under reduced pressure at temperatures between 60 and 200 °C, and the anode electrode was then calendered to the desired thickness.

### CELL TESTING

For half-cell tests, experimental carbon-containing anode electrodes are paired with one disk of sodium metal as reference and counter electrode. Glass Fibre GF/A is used as the separator and a suitable electrolyte is also employed. Any suitable Na-ion electrolyte may be used, preferably this may comprise one or more salts, for example NaPF6, NaAsF6, NaClO4, NaBF4, NaSCN and Na triflate, in combination with one or more organic solvents, for example, EC, PC, DEC, DMC, EMC, glymes, esters, acetates etc. Further additives such as vinylene carbonate and fluoro ethylene carbonate may also be incorporated. A preferred electrolyte composition comprises 0.5 M NaPF6/EC:PC:DEC. The cells indicated in Tables 4 and 5 were constructing using the following electrolyte compositions as indicated:

| Electrolyte | Composition |
|---|---|
| Electrolyte 1 | 1 mol/kg of Na[PF6] in (24.5 wt.% EC + 49 wt.% DEC + 24.5 wt.% PC + 1 wt.% P123 + 1 wt.% PCS) |
| Electrolyte 2 | 1 mol/kg of Na[PF6] in (76 wt.% PC + 20 wt.% DEC + 1 wt.% P123 + 2 wt.% PCS + 1 wt.% TMSB) |
| Electrolyte 3 | 0.5 mol/kg of Na[PF6] in (25 wt.% EC + 50 wt.% DEC + 25 wt.% PC) |

The chemical abbreviations used above are summarised below:

| Chemical abbreviations | Preferred IUPAC name | Also known as |
|---|---|---|
| EC | 1,3-Dioxolan-2-one | Ethylene carbonate |
| DEC | Diethyl carbonate | --- |
| PC | 4-Methyl-1,3-dioxolan-2-one | Propylene carbonate |
| PCS | 1,3-Propanediol cyclic sulphate | --- |
| P123 | Poly(ethylene glycol)-block-poly(propylene glycol)-block-poly(ethylene glycol) | Pluronic P123 |
| TMSB | Tis(trimethylsilyl) borate | --- |

All cells were rested for 24h prior to cycling. For three-electrode tests, carbon-containing anode material according to the present invention is used as negative electrode, a standard oxide material is used as positive electrode and a piece of sodium is used as reference, all three electrodes are wet by the same electrolyte. As separator, two polyethylene membranes of 24.5 um thickness were used. The half-cells are tested using Constant Current cycling technique, and the full-cells, including the three electrode full-cells are tested using Constant Current - Constant Voltage technique. The cells are cycled at a given current density between pre-set voltage limits. A commercial battery cycler from MTI Inc. (Richmond, CA, USA) or Maccor (Tulsa, OK, USA) was used. On charge, alkali ions are inserted into the carbon-containing anode material. During discharge, alkali ions are extracted from the anode and reinserted into the cathode active material.

**TABLE 4 - SUMMARY OF ELECTRODE PARAMETERS, CELL DESIGNS AND ELECTROCHEMICAL TEST CONDITIONS**

| Experimental material | Core | Surface treatment | Binder | Electrolyte | Anode coatweight | Active content | Anode active loading | Coating thickness | Mass balance | Voltage window | C-rate | Cell ref |
|---|---|---|---|---|---|---|---|---|---|---|---|---|
| | | | | | g/m² | % | g/m² | µm | g/g | V | | |
| Exp 1 | T-HC | Y | PVDF | Electrolyte 2 | 54.0 | 92 | 49.7 | 60 | 3.26 | 0 - 4.05 | ±C/10 | 001 |
| Exp 2 | T-HC | Y | PVDF | Electrolyte 1 | 59.7 | 92 | 54.9 | 69 | 3.29 | 0 - 4.05 | ±C/10 | 002 |
| | T-HC | Y | PVDF | | 64.1 | 92 | 59.0 | 73 | 3.06 | 0 - 4.05 | ±C/10 | 003 |
| Exp 3 | T-HC | Y | PVDF | Electrolyte 1 | 58.6 | 92 | 53.9 | 67 | 3.37 | 1.0 - 4.05 | ±C/10 | 004 |
| Exp 4 | T-HC | Y | PVDF | Electrolyte 1 | 63.8 | 92 | 58.7 | --- | 3.96 | 1.0 - 4.05 | ±C/10 | 005 |
| | T-HC | Y | PVDF | | 62.7 | 92 | 57.7 | 90 | 3.03 | 0 - 4.05 | ±C/10 | 006 |
| | T-HC | Y | PVDF | Electrolyte 2 | 59.4 | 92 | 54.6 | 90 | 3.23 | 0 - 4.05 | ±C/10 | 007 |
| | T-HC | Y | SBR/CMC | Electrolyte 2 | 57.8 | 95 | 54.9 | 64 | 3.25 | 0 - 4.05 | ±C/10 | 009 |
| Exp 5 | T-HC | Y | PVDF | Electrolyte 2 | 59.1 | 92 | 54.4 | 66 | 3.25 | 0 - 4.05 | ±C/10 | 008 |
| Exp 6 | AC | Y | PVDF | Electrolyte 1 | 55.1 | 92 | 50.7 | --- | **---*** | ---* | ±C/20 | 010 |
| Control Exp 1 | T-HC | N | PVDF | Electrolyte 1 | 52.2 | 92 | 48.0 | --- | 3.05 | 1.0 - 4.2 | ±C/10 | 011 |
| Control Exp 2 | AC | Y | PVDF | Electrolyte 3 | 72.9 | 92 | 67.1 | --- | ---* | ---* | ±C/20 | 012 |
| Control Exp 3 | AC | N | PVDF | Electrolyte 1 | 52.4 | 92 | 48.5 | --- | ---* | ---* | ±C/20 | 013 |
| Control Exp 4 | NT-HC | Y | SBR/CMC | Electrolyte 1 | 64.1 | 95 | 60.9 | 61 | 2.44 | 1 - 4.2 | ±C/10 | 014 |
| | NT-HC | Y | SBR/CMC | Electrolyte 2 | 64.8 | 95 | 61.6 | 65 | 2.42 | 1 - 4.2 | ±C/10 | 015 |
| Control Exp 5 | NT-HC | Y | PVDF | Electrolyte 1 | 56.0 | 92 | 51.5 | 66 | 2.36 | 1 - 4.2 | ±C/10 | 016 |
| Control Exp 6 | NT-HC | Y | PVDF | Electrolyte 1 | 63.9 | 92 | 58.8 | --- | ---* | ---* | ±C/20 | 017 |
| Control Exp 7 | NT-HC | Y | PVDF | Electrolyte 1 | 63.1 | 92 | 58.0 | --- | ---* | ---* | ±C/20 | 018 |
| Control Exp 8 | NT-HC | N | PVDF | Electrolyte 1 | 94.2 | 92 | 86.7 | --- | 1.42 | 1 -4.2 | ±C/10 | 019 |
| Control Exp 9 | NT-HC | N | PVDF | Electrolyte 1 | 88.2 | 92 | 81.1 | --- | 1.50 | 1 - 4.2 | ±C/10 | 020 |

| | | | | | | | | | | | | |
|---|---|---|---|---|---|---|---|---|---|---|---|---|
| ^{*} *vs*. Na⁺/Na | | | | | | | | | | | | |

**TABLE 5 - SUMMARY OF ELECTROCHEMICAL RESULTS**

| Experimental Material | Core | Surface treatment | Electrolyte | Mass balance | Anode reversible specific capacity | Anode irreversible specific capacity | Anode reversible area-specific capacity | Anode reversible volumetric specific capacity | 1st cycle Coulombic efficiency | Cell ref |
|---|---|---|---|---|---|---|---|---|---|---|
| | | | | g/g | mAh/g | mAh/g | mAh/cm2 | mAh/cm3 | % | |
| Exp 1 | T-HC | Y | Electrolyte 2 | 3.26 | 346 | 39.3 | 1.72 | 287 | 87.6 | 001 |
| Exp 2 | T-HC | Y | Electrolyte 1 | 3.29 | 361 | 48.1 | 1.98 | 287 | 88.2 | 002 |
| | T-HC | Y | | 3.06 | 338 | 32.4 | 1.99 | 273 | 91.2 | 003 |
| Exp 3 | T-HC | Y | Electrolyte 1 | 3.37 | 344 | 69.9 | 1.85 | 277 | 83.1 | 004 |
| Exp 4 | T-HC | Y | Electrolyte 1 | 3.96 | 407 | 31.8 | 2.39 | - | 92.7 | 005 |
| | T-HC | Y | | 3.03 | 338 | 27.4 | 1.95 | 217 | 92.5 | 006 |
| | T-HC | Y | Electrolyte 2 | 3.23 | 356 | 28.1 | 1.95 | 216 | 92.7 | 007 |
| | T-HC | Y | Electrolyte 2 | 3.25 | 355 | 24.4 | 1.95 | 305 | 93.6 | 009 |
| Exp 5 | T-HC | Y | Electrolyte 2 | 3.25 | 346 | 37.6 | 1.88 | 285 | 90.2 | 008 |
| Exp 6 | AC | Y | Electrolyte 1 | ---* | 291 | 31.5 | ---* | ---* | 87.2 | 010 |
| Control Exp 1 | T-HC | N | Electrolyte 1 | 3.05 | 307 | 135.9 | 1.64 | - | 69.3 | 011 |
| Control Exp 2 | AC | Y | Electrolyte 3 | ---* | 148 | 465.0 | ---* | ---* | 24.2 | 012 |
| Control Exp 3 | AC | N | Electrolyte 1 | ---* | 71 | 185.1 | ---* | ---* | 27.8 | 013 |
| Control Exp 4 | NT-HC | Y | Electrolyte 1 | 2.44 | 322 | 31.1 | 1.96 | 276 | 91.2 | 014 |
| | NT-HC | Y | Electrolyte 2 | 2.42 | 313 | 27.3 | 1.93 | 297 | 92.0 | 015 |
| Control Exp 5 | NT-HC | Y | Electrolyte 1 | 2.36 | 309 | 40.5 | 1.59 | 241 | 88.4 | 016 |
| Control Exp 6 | NT-HC | Y | Electrolyte 1 | ---* | 284 | 41.6 | ---* | ---* | 87.2 | 017 |
| Control Exp 7 | NT-HC | Y | Electrolyte 1 | ---* | 258 | 54.2 | ---* | ---* | 82.6 | 018 |

| Experimental Material | Core | Surface treatment | Electrolyte | Mass balance | Mass Anode reversible specific capacity | Anode irreversible specific capacity | Anode reversible area-specific capacity | Anode reversible volumetric specific capacity | 1st cycle Coulombic efficiency | Cell ref |
|---|---|---|---|---|---|---|---|---|---|---|
| | | | | g/g | mAh/g | mAh/g | mAh/cm2 | mAh/cm3 | % | |
| Control Exp 8 | NT-HC | N | Electrolyte 1 | 1.42 | 158 | 46.4 | 1.37 | --- | 77.3 | 019 |
| Control Exp 9 | NT-HC | N | Electrolyte 1 | 1.50 | 174 | 45.0 | 1.41 | --- | 79.4 | 020 |

| | | | | | | | | | | |
|---|---|---|---|---|---|---|---|---|---|---|
| ^{*} *vs*. Na⁺/Na | | | | | | | | | | |

### NOT ACCORDING TO THE PRESENT INVENTION - NO SURFACE TREAMENT

### ELECTROCHEMICAL TESTING OF NON-TEMPLATED HARD CARBON CONTAINING ANODE CONTROL MATERIAL 8 AND 9 (NO SURFACE TREATMENT) - FULL CELL

Table 5 shows the electrochemical performance data for cell 019 using anode control material 8, and cell 020 using anode control material 9. Anode control material 8 and 9 both relate to non-templated hard carbon that has not been surface treated according to the present invention.

Using the control material 8 in cell 019, it is possible to achieve a reversible desodiation capacity of 158 mAh/g with an irreversible specific capacity of 46.4 mAh/g and a 77.3% first-cycle columbic efficiency.

Using the control material 9 in cell 020, it is possible to achieve a reversible desodiation capacity of 174 mAh/g with an irreversible specific capacity of 45.0 mAh/g and a 79.4% first-cycle columbic efficiency.

### ELECTROCHEMICAL TESTING OF NON-TEMPLATED HARD CARBON CONTAINING ANODE CONTROL MATERIAL 4 AND 5 (WITH SURFACE TREATMENT) - FULL CELL

Table 5 shows the electrochemical performance data for cell 014 and 015 using anode control material 4, and cell 016 using anode control material 5. Anode control material 4 and 5 both relate to non-templated hard carbon that has been surface treated according to the present invention. Cells 014 and 016 use electrolyte 1 and cell 015 uses electrolyte 2.

Using the control material 4 in cell 014, it is possible to achieve a reversible desodiation capacity of 322 mAh/g with an irreversible specific capacity of 31.1 mAh/g and a 91.2% first-cycle columbic efficiency. Cell 015 achieved a reversible desodiation capacity of 313 mAh/g with an irreversible specific capacity of 27.3 mAh/g and a 92.0% first-cycle columbic efficiency when using electrolyte 2 verses electrolyte 1 in cell 014.

Using the control material 5 in cell 016, it is possible to achieve a reversible desodiation capacity of 309 mAh/g with an irreversible specific capacity of 40.5 mAh/g and a 88.4% first-cycle columbic efficiency.

### ELECTROCHEMICAL TESTING OF NON-TEMPLATED HARD CARBON CONTAINING ANODE CONTROL MATERIAL 6 AND 7 (WITH SURFACE TREATMENT) - HALF CELL (vs. Na+/Na)

Using the anode control material 6 in cell 017, a reversible desodiation capacity of 284 mAh/g with an irreversible specific capacity of 41.6 mAh/g and an 87.2% first-cycle columbic efficiency was achieved.

Using the anode control material 7 in cell 018, a reversible desodiation capacity of 258 mAh/g with an irreversible specific capacity of 54.2 mAh/g and an 82.6% first-cycle columbic efficiency was achieved.

### ELECTROCHEMICAL TESTING OF ACTIVATED HARD CARBON CONTAINING ANODE CONTROL MATERIAL 2 (WITH SURFACE TREATMENT) - HALF CELL (vs. Na+/Na)

Using the anode control material 2 in cell 012, a reversible desodiation capacity of 148 mAh/g with an irreversible specific capacity of 465.0 mAh/g and an 24.2 % first-cycle columbic efficiency was achieved.

### ELECTROCHEMICAL TESTING OF ACTIVATED HARD CARBON CONTAINING ANODE CONTROL MATERIAL 3 (NO SURFACE TREATMENT) - HALF CELL (vs. Na+/Na)

Using the anode control material 3 in cell 013, a reversible desodiation capacity of 71 mAh/g with an irreversible specific capacity of 185.1 mAh/g and an 27.8 % first-cycle columbic efficiency was achieved.

### ACCORDING TO THE PRESENT INVENTION - SURFACE TREATMENT

### ELECTROCHEMICAL TESTING OF TEMPLATED HARD CARBON CONTAINING ANODE MATERIAL 2 to 6 (WITH SURFACE TREATMENT) - FULL CELL

As can be seen from Table 5, the first-cycle columbic efficiency and anode reversible specific capacity for full-cells 001 to 009 featuring surface-treated templated carbon anode materials 1 to 5 were unexpectedly significantly and systematically higher than those observed in control full-cells 014 to 016 featuring control non-templated surface-treated carbon materials 4 to 5. In particular, full-cells 001 to 009 achieved an anode specific reversible capacity from 338 to 407 mAh/g compared to an anode specific reversible capacity from 309 to 322 mAh/g observed for control full cells 014 to 016.

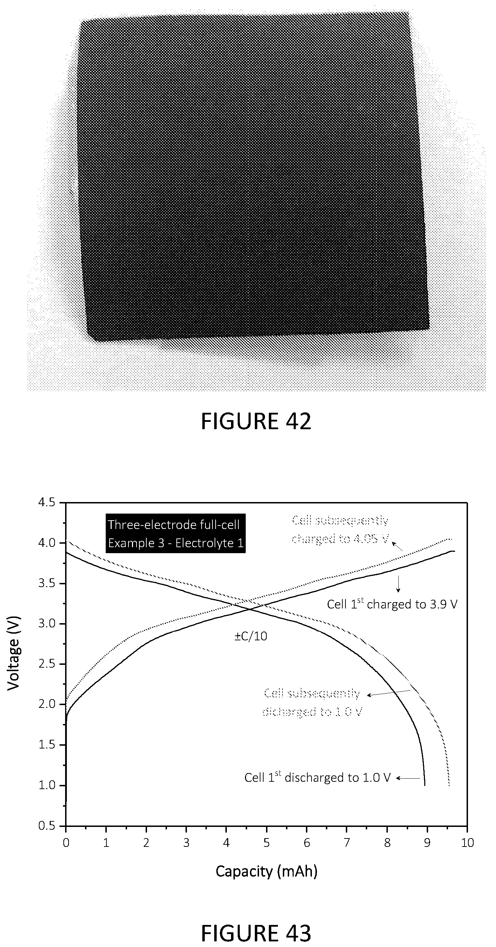

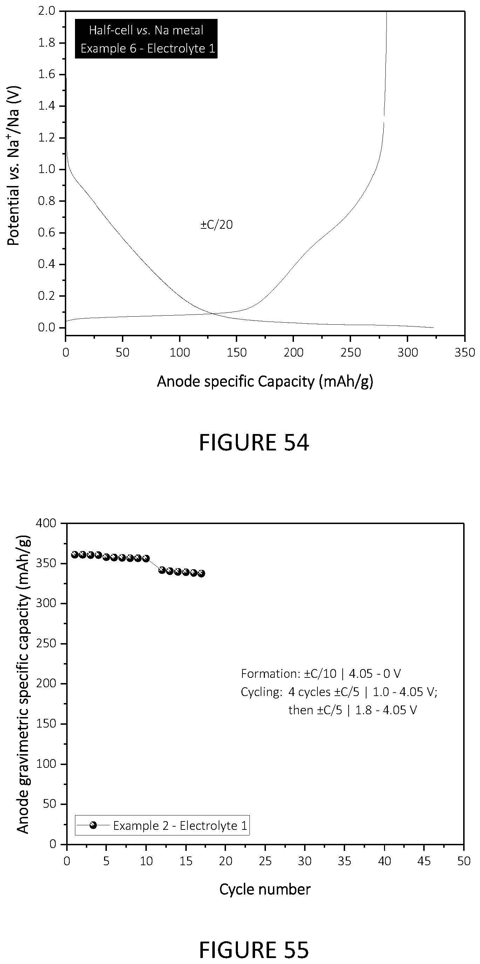

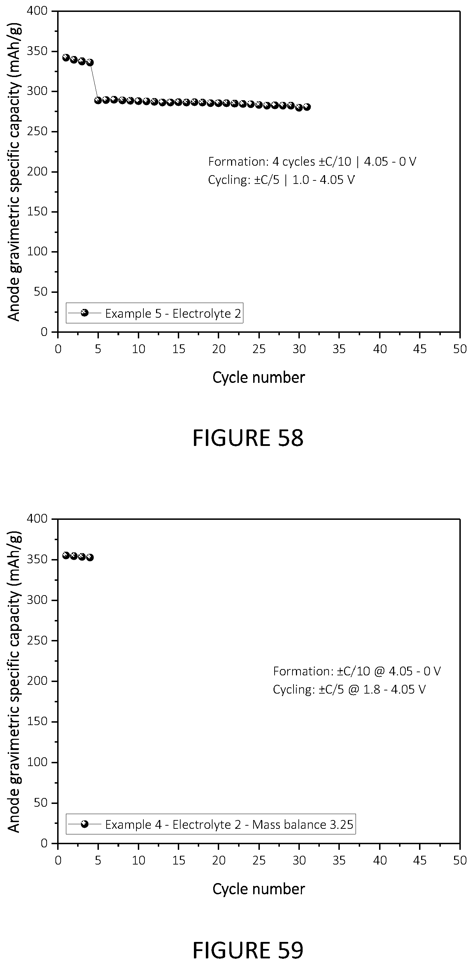

It must be noted that the true plating-free reversible specific capacity of the surface-treated templated hard carbon, according to the present invention is in excess of 400 mAh/g, with first cycle Columbic efficiencies typically in excess of 92%. Figure 42 is an anode electrode containing surface-treated template hard carbon, according to the present invention, that is dismantled from the full-cell with > 400 mAh/g anode reversible specific capacity. After discharge to 1.0 V and dismantling, no trace of plating i.e. saturation or dendrite formation was visible. It is also noteworthy that for practical and safety reasons, the anode specific capacity is often underutilised in commercial full-cells. Therefore, for all the cycle life data presented in figures 54 to 58, the anodes were run at ca. 350 mAh/g, i.e., underutilised by at least 50 mAh/g. The extent of anode utilisation could be controlled by controlling the mass and capacity balance of full cells. This could be conveniently achieved by selecting the appropriate coatweights of anode and cathode electrodes.

It is noted that control full-cells 014 to 016 achieved an 88.4 to 91.2% first-cycle columbic efficiency, which is comparable to the 88.2 to 93.6% first-cycle columbic efficiency seen from the full-cells 002 to 009 featuring experimental anode-carbon containing materials 1 to 5.

Cell 011 featuring control non-surface-treated templated carbon material 1 did not exhibit high anode reversible specific capacity or first-cycle columbic efficiency when compared to those values observed in full-cells 001 to 009 featuring templated surfaced treated carbon anode materials 1 to 5 or full-cells 014 to 016 featuring control non-templated surface treated carbon materials 4 to 5.

The Applicant understands that this observation in poor efficiency can be traced back to control templated non-surface treated carbon material 1 exhibiting a high micropore surface area of 18.8941 m2/g as shown in Table 5. That is, control material 1 was not surface treated.

Further still, cell 019 featuring control non-templated non-surface treated carbon material 8 and cell 020 featuring control non-templated non-surface treated carbon material 9 both exhibited lower values than full-cells 001 to 009, 011, and 014 to 016 for anode reversible specific capacity, and lower values than full-cells 001 to 009 and 014 to 016 for first-cycle columbic efficiency.

Thus, an effect arising from the present invention, and particularly from using a templated primary carbon-containing material of the present invention in combination with the surface treatment of the present invention, is that an increase in both columbic efficiency and anode reversible specific capacity is observed. Therefore, a high anode reversible specific capacity and high first-cycle columbic efficiency is shown to be achieved when a templated primary carbon-containing material of the present invention is surface-treated in accordance with the present invention.

Cell 004 featuring templated surface treated carbon material 3 exhibited a lower first-cycle columbic efficiency than cells 001 and 005 to 009. The Applicant understand that this is likely to be because the carbon content as determined by XPS in Table 3 was lower for material 3 than it was for materials 1 and 4 to 5. Therefore, a carbon content of greater than 92% is highly desirable to achieve a first-cycle columbic efficiency of greater than 83% when the primary carbon-containing material comprises a templated porous carbon material.

Cell 009 exhibited a first-cycle columbic efficiency of 93.6 %, which was the highest observed result in Table 5. The Applicant understand this effect to be derived from the use of surface-treated templated carbon material 4 in combination with an electrode formulation comprising 95 wt.% active loading and SBR/CMC as binder additive and water as slurry solvent. In comparison, cell 007 comprising the same templated surface treated carbon material (Exp 4) but with a different electrode formulation comprising 92 wt.% active loading and PVDF as binder additive and NMP as slurry solvent, exhibits lower first-cycle columbic efficiency under comparable electrochemical test conditions.

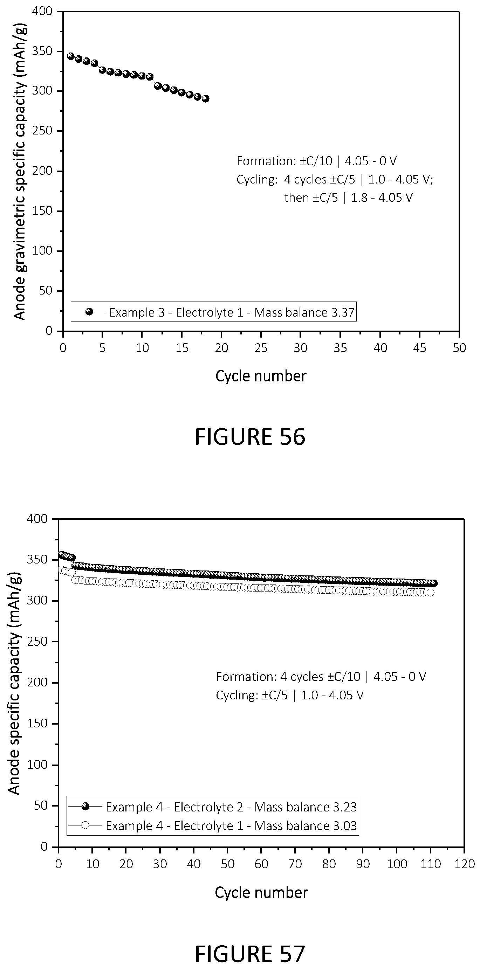

As can be seen from figure 57, the surface-treated non-templated hard carbon offers stable cycling behaviour with ca. 95% retention of the original capacity and energy, after 110 cycles at +C/5 charge, -C/5 discharge, between 1.0 - 4.05 V.

For the purpose of calculating the capacity and energy retention of full-cells, expressed in %, the absolute capacity and energy values of all the proceeding cycles are normalised based on the absolute capacity and energy values of the cell at the fifth cycle, that is the first ±C/5 cycle after the four initial ±C/10 formation cycles. Herein, the formation cycles refer to the cycles where the SEI layer is formed on the surface of the anode electrode, after which the formed full-cells are subsequently degassed, re-vacuum-sealed and put back on the cycler for further tests.

### EXAMPLE 3 (ACCORDING TO THE PRESENT INVENTION)

### ELECTROCHEMICAL TESTING OF ACTIVATED CARBON CONTAINING ANODE MATERIAL 7 (WITH SURFACE TREATMENT) - HALF CELL (vs. Na+/Na)

As can be seen from Table 5, the first-cycle columbic efficiency and anode reversible specific capacity for half-cell 010 featuring surfaced treated activated carbon material 6 was unexpectedly significantly and systematically higher than the values observed in control half-cell 013 featuring non-surface treated activated carbon material 2. In particular, half-cell 010 achieved an anode specific reversible capacity of 291 mAh/g compared to an anode specific reversible capacity of 71 mAh/g observed for control half-cell 013. Furthermore, half-cell 010 achieved a 87.2% first-cycle columbic efficiency, compared to a 27.8% first-cycle columbic efficiency seen for half-cell 013.

However, these advantages were not achieved in a half-cell featuring surface treated activated carbon having a specific surface area of 1000 m²/g or greater, as confirmed by half-cell 012. In particular, an anode specific reversible capacity of 148 mAh/g was observed for control half-cell 012, along with a 24.2% first-cycle columbic efficiency.

Thus, an effect arising from the present invention, and particularly from using an activated carbon of the present invention in combination with the surface treatment of the present invention, is that an increase in both columbic efficiency and anode reversible specific capacity is observed.

## Claims

1. A carbon-containing anode material which is capable of the insertion and extraction of alkali metal ions and which has a carbon structure comprising:
a) a core that comprises one or more primary carbon-containing materials selected from i) templated porous carbon material, and/or ii) activated carbon material, in which the activated carbon material has a specific surface area of from 200 m²/g to 1000 m²/g, as determined using nitrogen gas BET analysis; and
b) an outer surface comprising one or more carbonised materials chemically bonded on the one or more primary carbon-containing materials, wherein the carbon-containing anode material has an open micropore specific surface area of 0 m²/g to 5 m²/g, as determined using nitrogen gas BET analysis.

2. A carbon-containing anode material according to claim 1, wherein the carbon-containing anode material has a specific surface area of 0 m²/g to 5 m²/g, as determined using nitrogen gas BET analysis.

3. A carbon-containing anode material according to claim 1 or claim 2, wherein the carbon-containing anode material has an average pore radius of 9 Å or greater, as determined using small angle X-ray scattering.

4. A carbon-containing anode material according to any preceding claim, wherein the templated porous carbon material is derived from carbon-containing starting material which is then treated by an endo-templating process.

5. A carbon-containing anode material according to any preceding claim, wherein the one or more primary carbon-containing materials are derived from the pyrolysis of plant-based materials, animal-derived materials, hydrocarbon materials, carbohydrate materials and other carbon-containing organic materials.

6. A carbon-containing anode material according any preceding claim, wherein the one or more primary carbon-containing materials comprise one or more carbon composite materials represented by: (carbon)-X
where X is one or more elements selected from the group consisting of antimony, tin, phosphorus, sulfur, boron, aluminium, gallium, indium, germanium, lead, arsenic, bismuth, titanium, molybdenum, selenium, tellurium, silicon, carbon and magnesium; or where X is one or more oxides of elements selected from the group consisting of antimony, tin, phosphorus, sulfur, boron, aluminium, gallium, indium, germanium, lead, arsenic, bismuth, titanium, molybdenum, selenium, tellurium, silicon, carbon and magnesium.

7. A carbon-containing anode material according to any preceding claim wherein the carbonised material is derived from one or more secondary carbon-containing materials selected from organic and hydrocarbon materials.

8. A carbon-containing anode material according to any preceding claim comprising a minimum of 92.0 atomic percent of carbon on its outer surface.

9. A carbon-containing anode material according to any preceding claim wherein the one or more primary carbon-containing materials have a particle size from 1nm to 30 µm.

10. A process for the preparation of a carbon-containing anode material which is capable of the insertion and extraction of alkali metal ions comprising:
a) providing a core that comprises one or more primary carbon-containing materials selected from i) templated porous carbon material, and/or ii) activated carbon material, in which the activated carbon material has a specific surface area of from 200 m²/g to 1000 m²/g, as determined using nitrogen gas BET analysis and
b) contacting the core with one or more secondary carbon-containing materials at a temperature of up to 950 °C, to thereby yield a carbon-containing anode material that has an outer surface comprising one or more carbonised materials chemically bonded on the one or more primary carbon-containing materials, wherein the carbon-containing anode material has an open micropore specific surface area of 0 m²/g to 5 m²/g, as determined using nitrogen gas BET analysis.

11. A process according to claim 10, in which the templated porous carbon material in step a) is formed by:
(i) providing one or more carbon-containing starting materials together with one or more porogenic substances and/or one or more compounds used to derive one or more porogenic substances;
(ii) optionally initially heating the components provided in step (i) preferably at a temperature from 60 to 950 °C;
(iii) optionally purifying the resulting product of step (ii); and
(iv) pyrolysing the components provided in step (i) or the optional resulting product of step (ii) or step (iii), preferably at temperature from 600 to 3000 °C.

12. A process according to claim 11, in which step i) comprises a physical mixture and the one or more carbon-containing starting materials are selected from a hydrocarbon material and carbohydrate material, and the one or more porogenic substances and/or one or more compounds used to derive one or more porogenic substances are selected from a salt, an inorganic compound, and an organometallic compound;
optionally in which the one or more carbon-containing starting materials comprises a carbohydrate material and the one or more porogenic substances and/or one or more compounds used to derive one or more porogenic substances comprises a magnesium salt.

13. A process according to claim 11 or 12, in which step iii) includes using alkali and/or acid conditions.

14. A sodium-ion cell comprising a cathode electrode, an anode electrode and an electrolyte, wherein the anode electrode comprises a carbon-containing anode material according to any of claims 1 to 9;
optionally in which the anode electrode further comprises a polymeric binder, and the polymer binder comprises carboxymethylcellulose (CMC).

15. A lithium-ion cell comprising a cathode electrode, an anode electrode and an electrolyte, wherein the anode electrode comprises a carbon-containing anode material according to any of claims 1 to 9.

## Patentansprüche

1. Kohlenstoffhaltiges Anodenmaterial, das zur Insertion und Extraktion von Alkalimetallionen fähig ist und das eine Kohlenstoffstruktur aufweist, umfassend:
a) einen Kern, der ein oder mehrere primäre kohlenstoffhaltige Materialien umfasst, ausgewählt aus i) porösem Schablonenkohlenstoffmaterial und/oder ii) Aktivkohlenstoffmaterial, wobei das Aktivkohlenstoffmaterial eine spezifische Oberfläche von 200 m²/g bis 1000 m²/g aufweist, bestimmt unter Verwendung von Stickstoffgas-BET-Analyse; und
b) eine äußere Oberfläche, umfassend ein oder mehrere karbonisierte Materialien, die chemisch an das eine oder die mehreren primären kohlenstoffhaltigen Materialien gebunden sind, wobei das kohlenstoffhaltige Anodenmaterial eine offene spezifische Mikroporenoberfläche von 0 m²/g bis 5 m²/g aufweist, bestimmt unter Verwendung von Stickstoffgas-BET-Analyse.

2. Kohlenstoffhaltiges Anodenmaterial nach Anspruch 1, wobei das kohlenstoffhaltige Anodenmaterial eine spezifische Oberfläche von 0 m²/g bis 5 m²/g aufweist, bestimmt unter Verwendung von Stickstoffgas-BET-Analyse.

3. Kohlenstoffhaltiges Anodenmaterial nach Anspruch 1 oder 2, wobei das kohlenstoffhaltige Anodenmaterial einen durchschnittlichen Porenradius von 9 Å oder mehr aufweist, bestimmt unter Verwendung von Kleinwinkel-Röntgenstreuung.

4. Kohlenstoffhaltiges Anodenmaterial nach einem der vorherigen Ansprüche, wobei das gehärtete poröse Kohlenstoffmaterial von kohlenstoffhaltigem Ausgangsmaterial abgeleitet ist, das dann durch ein Endo-Härtungsverfahren behandelt wird.

5. Kohlenstoffhaltiges Anodenmaterial nach einem der vorherigen Ansprüche, wobei das eine oder die mehreren primären kohlenstoffhaltigen Materialien aus der Pyrolyse von pflanzlichen Materialien, tierischen Materialien, Kohlenwasserstoffmaterialien, Kohlenhydratmaterialien und anderen kohlenstoffhaltigen organischen Materialien abgeleitet sind.

6. Kohlenstoffhaltiges Anodenmaterial nach einem der vorherigen Ansprüche, wobei das eine oder die mehreren primären kohlenstoffhaltigen Materialien ein oder mehrere Kohlenstoffverbundmaterialien umfassen, dargestellt durch: (Kohlenstoff)-X
wobei X ein oder mehrere Elemente ist, ausgewählt aus der Gruppe, bestehend aus Antimon, Zinn, Phosphor, Schwefel, Bor, Aluminium, Gallium, Indium, Germanium, Blei, Arsen, Wismut, Titan, Molybdän, Selen, Tellur, Silizium, Kohlenstoff und Magnesium; oder
wobei X ein oder mehrere Oxide von Elementen ist, ausgewählt aus der Gruppe, bestehend aus Antimon, Zinn, Phosphor, Schwefel, Bor, Aluminium, Gallium, Indium, Germanium, Blei, Arsen, Wismut, Titan, Molybdän, Selen, Tellur, Silizium, Kohlenstoff und Magnesium.

7. Kohlenstoffhaltiges Anodenmaterial nach einem der vorherigen Ansprüche, wobei das karbonisierte Material von einem oder mehreren sekundären kohlenstoffhaltigen Materialien abgeleitet ist, die ausgewählt sind aus organischen und Kohlenwasserstoffmaterialien.

8. Kohlenstoffhaltiges Anodenmaterial nach einem der vorherigen Ansprüche, umfassend mindestens 92,0 Atomprozent Kohlenstoff auf seiner Außenfläche.

9. Kohlenstoffhaltiges Anodenmaterial nach einem der vorherigen Ansprüche, wobei das eine oder die mehreren primären kohlenstoffhaltigen Materialien eine Teilchengröße von 1 nm bis 30 µm aufweisen.

10. Verfahren zur Herstellung eines kohlenstoffhaltigen Anodenmaterials, das zur Insertion und Extraktion von Alkalimetallionen fähig ist, umfassend:
a) Bereitstellen eines Kerns, der ein oder mehrere primäre kohlenstoffhaltige Materialien umfasst, ausgewählt aus i) porösem Schablonenkohlenstoffmaterial und/oder ii) Aktivkohlenstoffmaterial, wobei das Aktivkohlenstoffmaterial eine spezifische Oberfläche von 200 m²/g bis 1000 m²/g aufweist, bestimmt unter Verwendung von Stickstoffgas-BET-Analyse; und
b) Inkontaktbringen des Kerns mit einem oder mehreren sekundären kohlenstoffhaltigen Materialien bei einer Temperatur von bis zu 950 °C, um dadurch ein kohlenstoffhaltiges Anodenmaterial zu ergeben, das eine äußere Oberfläche aufweist, umfassend ein oder mehrere karbonisierte Materialien, die chemisch an das eine oder die mehreren primären kohlenstoffhaltigen Materialien gebunden sind, wobei das kohlenstoffhaltige Anodenmaterial eine offene spezifische Mikroporenoberfläche von 0 m²/g bis 5 m²/g aufweist, bestimmt unter Verwendung von Stickstoffgas-BET-Analyse.

11. Verfahren nach Anspruch 10, wobei das gehärtete poröse Kohlenstoffmaterial in Schritt a) gebildet wird durch:
(i) Bereitstellen eines oder mehrerer kohlenstoffhaltiger Ausgangsmaterialien zusammen mit einem oder mehreren porogenen Stoffen und/oder einer oder mehreren Verbindungen, die verwendet werden, um einen oder mehrere porogene Stoffe abzuleiten;
(ii) optional anfängliches Erhitzen der in Schritt (i) bereitgestellten Komponenten, vorzugsweise auf eine Temperatur von 60 bis 950 °C;
(iii) optional Aufreinigen des resultierenden Produkts von Schritt (ii); und
(iv) Pyrolysieren der in Schritt (i) bereitgestellten Komponenten oder des optionalen resultierenden Produkts aus Schritt (ii) oder Schritt (iii), vorzugsweise bei einer Temperatur von 600 bis 3000 °C.

12. Verfahren nach Anspruch 11, wobei Schritt i) ein physikalisches Gemisch umfasst und das eine oder die mehreren kohlenstoffhaltigen Ausgangsmaterialien ausgewählt sind aus einem Kohlenwasserstoffmaterial und Kohlenhydratmaterial und die eine oder die mehreren porogenen Substanzen und/oder eine oder mehrere Verbindungen, die verwendet werden, um eine oder mehrere porogene Substanzen abzuleiten, ausgewählt sind aus einem Salz, einer anorganischen Verbindung und einer metallorganischen Verbindung;
optional wobei der eine oder die mehreren kohlenstoffhaltigen Ausgangsstoffe ein Kohlenhydratmaterial umfassen und der eine oder die mehreren porogenen Stoffe und/oder eine oder mehrere Verbindungen, die zum Ableiten eines oder mehrerer porogener Stoffe verwendet werden, ein Magnesiumsalz umfassen.

13. Verfahren nach Anspruch 11 oder 12, wobei Schritt iii) ein Verwenden von Alkali- und/oder Säurebedingungen beinhaltet.

14. Natriumionenzelle, umfassend eine Kathodenelektrode, eine Anodenelektrode und einen Elektrolyten, wobei die Anodenelektrode ein kohlenstoffhaltiges Anodenmaterial nach einem der Ansprüche 1 bis 9 umfasst;
optional wobei die Anodenelektrode ferner ein polymeres Bindemittel umfasst und das polymere Bindemittel Carboxymethylcellulose (CMC) umfasst.

15. Lithium-Ionen-Zelle, umfassend eine Kathodenelektrode, eine Anodenelektrode und einen Elektrolyten, wobei die Anodenelektrode ein kohlenstoffhaltiges Anodenmaterial nach einem der Ansprüche 1 bis 9 umfasst.

## Revendications

1. Matériau d'anode contenant du carbone qui peut insérer et extraire des ions de métaux alcalins et qui a une structure de carbone comprenant :
a) un noyau qui comprend un ou plusieurs matériaux primaires contenant du carbone choisis parmi i) un matériau de carbone poreux matricé, et/ou ii) un matériau de charbon actif, dans lequel le matériau de charbon actif a une surface spécifique de 200 m²/g à 1000 m²/g, telle que déterminée à l'aide d'une analyse BET de gaz d'azote ; et
b) une surface extérieure comprenant un ou plusieurs matériaux carbonisés liés chimiquement sur l'un ou plusieurs matériaux contenant du carbone primaire, dans lequel le matériau d'anode contenant du carbone a une surface spécifique de micropore ouverte de 0 m²/g à 5 m²/g, telle que déterminée à l'aide d'une analyse BET de gaz d'azote.

2. Matériau d'anode contenant du carbone selon la revendication 1, dans lequel le matériau d'anode contenant du carbone a une surface spécifique de 0 m²/g à 5 m²/g, telle que déterminée à l'aide d'une analyse BET de gaz d'azote.

3. Matériau d'anode contenant du carbone selon la revendication 1 ou la revendication 2, dans lequel le matériau d'anode contenant du carbone a un rayon de pore moyen de 9 Å ou plus, tel que déterminé en utilisant une diffusion de rayons X à petit angle.

4. Matériau d'anode contenant du carbone selon l'une quelconque des revendications précédentes, dans lequel le matériau de carbone poreux à gabarit est dérivé d'un matériau de départ contenant du carbone qui est ensuite traité par un procédé d'endo-gabarit.

5. Matériau d'anode contenant du carbone selon l'une quelconque des revendications précédentes, dans lequel les un ou plusieurs matériaux primaires contenant du carbone sont dérivés de la pyrolyse de matériaux à base de plantes, de matériaux d'origine animale, de matériaux hydrocarbonés, de matériaux glucidiques et d'autres matériaux organiques contenant du carbone.

6. Matériau d'anode contenant du carbone selon l'une quelconque des revendications précédentes, dans lequel l'un ou plusieurs matériaux primaires contenant du carbone comprennent un ou plusieurs matériaux composites de carbone représentés par : (carbone)-X
où X est un ou plusieurs éléments choisis dans le groupe constitué par l'antimoine, l'étain, le phosphore, le soufre, le bore, l'aluminium, le gallium, l'indium, le germanium, le plomb, l'arsenic, le bismuth, le titane, le molybdène, le sélénium, le tellure, le silicium, le carbone et le magnésium ; ou
où X est un ou plusieurs oxydes d'éléments choisis dans le groupe constitué par l'antimoine, l'étain, le phosphore, le soufre, le bore, l'aluminium, le gallium, l'indium, le germanium, le plomb, l'arsenic, le bismuth, le titane, le molybdène, le sélénium, le tellure, le silicium, le carbone et le magnésium.

7. Matériau d'anode contenant du carbone selon l'une quelconque des revendications précédentes, dans lequel le matériau carbonisé est dérivé d'un ou plusieurs matériaux contenant du carbone secondaire sélectionnés parmi des matériaux organiques et hydrocarbonés.

8. Matériau d'anode contenant du carbone selon l'une quelconque des revendications précédentes, comprenant un minimum de 92,0 pour cent atomique de carbone sur sa surface extérieure.

9. Matériau d'anode contenant du carbone selon l'une quelconque des revendications précédentes, dans lequel le ou les matériaux primaires contenant du carbone ont une taille de particule de 1 nm à 30 µm.

10. Procédé pour la préparation d'un matériau d'anode contenant du carbone qui peut insérer et extraire des ions de métal alcalin, comprenant les étapes consistant à :
a) fournir un noyau qui comprend un ou plusieurs matériaux primaires contenant du carbone choisis parmi i) un matériau de carbone poreux matricé, et/ou ii) un matériau de charbon actif, dans lequel le matériau de charbon actif a une surface spécifique de 200 m²/g à 1000 m²/g, telle que déterminée à l'aide d'une analyse BET de gaz d'azote ; et
b) mettre en contact le noyau avec un ou plusieurs matériaux secondaires contenant du carbone à une température allant jusqu'à 950°C, pour produire ainsi un matériau d'anode contenant du carbone qui a une surface extérieure comprenant un ou plusieurs matériaux carbonisés liés chimiquement sur l'un ou plusieurs matériaux primaires contenant du carbone, dans lequel le matériau d'anode contenant du carbone a une surface spécifique de micropore ouverte de 0 m²/g à 5 m²/g, telle que déterminée à l'aide d'une analyse BET de gaz d'azote.

11. Procédé selon la revendication 10, dans lequel le matériau de carbone poreux matricé dans l'étape a) est formé par :
(i) la fourniture d'une ou de plusieurs matières premières contenant du carbone ainsi qu'une ou plusieurs substances porogènes et/ou un ou plusieurs composés utilisés pour dériver une ou plusieurs substances porogènes ;
(ii) éventuellement le chauffage initial des composants fournis à l'étape (i) de préférence à une température de 60 à 950°C ;
(iii) optionnellement la purification du produit résultant de l'étape (ii) ; et
(iv) la pyrolyse des composants fournis dans l'étape (i) ou du produit résultant facultatif de l'étape (ii) ou de l'étape (iii), de préférence à une température de 600 à 3000 °C.

12. Procédé selon la revendication 11, dans lequel l'étape i) comprend un mélange physique et les un ou plusieurs matériaux de départ contenant du carbone sont choisis parmi un matériau hydrocarboné et un matériau glucidique, et les une ou plusieurs substances porogènes et/ou un ou plusieurs composés utilisés pour dériver une ou plusieurs substances porogènes sont choisis parmi un sel, un composé inorganique et un composé organométallique ;
éventuellement dans lequel l'une ou plusieurs matières premières contenant du carbone comprennent une matière glucidique et l'une ou plusieurs substances porogènes et/ou un ou plusieurs composés utilisés pour dériver une ou plusieurs substances porogènes comprennent un sel de magnésium.

13. Procédé selon la revendication 11 ou 12, dans lequel l'étape iii) comprend l'utilisation de conditions alcalines et/ou acides.

14. Cellule de ions sodium comprenant une électrode de cathode, une électrode d'anode et un électrolyte, dans laquelle l'électrode d'anode comprend un matériau d'anode contenant du carbone selon l'une quelconque des revendications 1 à 9 ;
éventuellement dans laquelle l'électrode d'anode comprend en outre un liant polymère, et le liant polymère comprend de la carboxyméthylcellulose (CMC).

15. Cellule de ions lithium comprenant une électrode de cathode, une électrode d'anode et un électrolyte, dans laquelle l'électrode d'anode comprend un matériau d'anode contenant du carbone selon l'une quelconque des revendications 1 à 9.
